# EUROPEAN PATENT APPLICATION

(11) **EP 4 800 760 A1**
(43) Date of publication of application: **02.09.2026**
(21) Application number: 24895433.1
(22) Date of filing: 15.05.2024
(51) Int. Cl.: H01M 4/36

(54) **SILICON-CARBON COMPOSITE MATERIAL, PREPARATION METHOD, SECONDARY BATTERY, AND ELECTRIC DEVICE**

(30) Priority: 30.11.2023 CN 202311640839
(71) Applicant: Contemporary Amperex Technology Co., Limited, Ningde, Fujian 352100 (CN)
(72) Inventor: WANG, Jiazheng, Ningde, Fujian 352100 (CN); DENG, Jingxian, Ningde, Fujian 352100 (CN); YE, Jianxiong, Ningde, Fujian 352100 (CN); LI, Yuan, Ningde, Fujian 352100 (CN)
(74) Representative: Ziebig Hengelhaupt Intellectual Property Attorneys Patentanwaltskanzlei PartGmbB
(86) International application number: PCT/CN2024/093392
(87) International publication number: WO 2025/112322

(57) **Abstract**

A silicon-carbon composite material, a preparation method, a secondary battery, and a power consuming apparatus. The silicon-carbon composite material includes an inner region and an outer region. The inner region mainly includes silicon-containing material particles, and the outer region mainly includes carbon-based material particles. The silicon-carbon composite material has an excellent gram capacity, and can enhance the high-temperature storage performance and cycling stability of a battery.

## Description

### CROSS-REFERENCE TO RELATED APPLICATIONS

The present application claims priority to Chinese Patent Application No. 202311640839.7, filed on November 30, 2023 and entitled "SILICON-CARBON COMPOSITE MATERIAL, PREPARATION METHOD, SECONDARY BATTERY, AND POWER CONSUMING APPARATUS", which is incorporated herein by reference in its entirety.

### TECHNICAL FIELD

The present application relates to the technical field of secondary batteries, and in particular, to a silicon-carbon composite material, a preparation method, a secondary battery, and a power consuming apparatus.

### BACKGROUND

In recent years, secondary batteries are widely used in energy storage power systems such as hydroelectric power stations, thermal power stations, wind power stations, and solar power stations, as well as a variety of fields such as electric tools, electric bicycles, electric motorcycles, electric vehicles, military equipment, and aerospace.

With the wide application of secondary batteries, higher requirements have also been placed on their energy densities. A silicon-carbon composite material can enhance an energy density of a battery, but usually deteriorates the storage performance and cycling performance of the battery. Therefore, the existing silicon-carbon composite material still needs to be enhanced.

### SUMMARY

In view of the foregoing problems, the present application is proposed. An objective of the present application is to provide a silicon-carbon composite material. The silicon-carbon composite material has an excellent gram capacity, and can enhance the high-temperature storage performance and cycling stability of a battery.

A first aspect of the present application provides a silicon-carbon composite material. The silicon-carbon composite material includes an inner region and an outer region. The inner region mainly includes silicon-containing material particles, and the outer region mainly includes carbon-based material particles.

Compared with a carbon-based material, silicon has a higher specific capacity. However, high surface reactivity of silicon tends to cause decomposition of an electrolyte solution on the surface of a silicon negative electrode, leading to degradation of the storage performance of the silicon negative electrode. Furthermore, the lithium storage mechanism of the silicon negative electrode involves significant volume expansion and shrinkage of the silicon negative electrode during lithiation/delithiation. This not only deteriorates the cycling performance of a battery, but also causes continuous fracture and reformation of a solid electrolyte interphase (SEI) film, leading to persistent consumption of active ions and further deterioration of the storage performance of the battery. Compared with silicon, a carbon-based material has low surface activity and high structural stability, but is incapable of enhancing an energy density of a battery. Therefore, according to the silicon-carbon composite material provided in the present application, the silicon-containing material with a high capacity and the carbon-based material having a long storage life are used to form secondary particles in which an inner region mainly includes the silicon-containing material particles while an outer region mainly includes the carbon-based material particles. This structure endows a battery with an excellent energy density. Meanwhile, the storage performance of the battery is enhanced by reducing the surface activity of the silicon-carbon composite material and blocking contact between silicon and an electrolyte solution. In addition, the carbon-based material particles in the outer region have a relatively high strength, which helps suppress the volume expansion of the silicon-containing material particles, thereby enhancing the structural stability of the silicon-carbon composite material and further enhancing the cycling stability of the battery.

Compared with a silicon-carbon composite material including secondary particles in which silicon-containing material particles and carbon-based material particles are directly mixed or uniformly distributed, the silicon-carbon composite material of the present application not only blocks contact between silicon and an electrolyte solution, but also reserves a space for volume expansion of the silicon-containing material particles by means of reserving voids, thereby enhancing the storage performance and cycling stability of the battery, and also achieving an excellent energy density.

In any embodiment, a number of the silicon-containing material particles in the inner region is less than or equal to 3, and optionally, 1 or 2.

When the number of the silicon-containing material particles in the inner region falls within the foregoing range, the carbon-based material particles densely encapsulate the silicon-containing material particles, and a particle size of the finished silicon-carbon composite material is controlled within a suitable range, thereby reducing contact between silicon and an electrolyte solution and enhancing the kinetic properties of the battery. Meanwhile, the silicon-carbon composite material meets requirements for the processing performance during negative electrode slurry homogenization and negative electrode plate coating, thereby enabling the battery to achieve excellent storage performance, cycling stability, and kinetic properties.

In any embodiment, a mass fraction of silicon in a region located within a distance r/2 from the geometric center of the silicon-carbon composite material is greater than or equal to 30%, and optionally, 35% to 45%, where r denotes a minor axis of the silicon-carbon composite material.

When the mass fraction of silicon in the region located within the distance r/2 from the geometric center of the silicon-carbon composite material falls within the foregoing range, the battery can achieve an excellent energy density, storage performance, and cycling stability.

In any embodiment, a mass fraction of carbon in a region extending inward from the outer surface of the silicon-carbon composite material by a distance r/2 is greater than or equal to 80%, and optionally, 90% to 100%, where r denotes the minor axis of the silicon-carbon composite material.

When the mass fraction of carbon in the region extending inward from the outer surface of the silicon-carbon composite material by the distance r/2 falls within the foregoing range, the silicon-carbon composite material can block contact between silicon and the electrolyte solution, and suppress a volume change of silicon during lithiation/delithiation, thereby enhancing the storage performance and cycling stability of the battery.

In any embodiment, the outer region of the silicon-carbon composite material further includes an amorphous carbon coating layer.

The amorphous carbon coating layer in the outer region can further block contact between silicon and the electrolyte solution, and can reduce a specific surface area of the silicon-carbon composite material. This helps avoid concavo-convex surfaces of the prepared secondary particles, as such concavo-convex surfaces may otherwise lead to an increased specific surface area of the silicon-carbon composite material, enlarged contact area with the electrolyte solution, and greater consumption of active ions due to SEI film formation. As a result, the overall storage performance, cycling stability, and initial Coulombic efficiency of the battery are enhanced.

In any embodiment, the Dv50 of the silicon-containing material particles is greater than or equal to the Dv50 of the carbon-based material particles.

The Dv50 of the silicon-containing material particles is greater than or equal to the Dv50 of the carbon-based material particles, which promotes more complete encapsulation of the silicon-containing material particles by the carbon-based material particles, thereby enhancing the storage performance of the battery.

In any embodiment, the Dv50 of the silicon-containing material particles is less than or equal to 5 µm.

When the Dv50 of the silicon-containing material particles falls within the foregoing range, the particle size of the finished silicon-carbon composite material is controlled within the suitable range, thereby ensuring good electrode plate processing performance and kinetic properties of the silicon-carbon composite material.

In any embodiment, the Dv50 of the carbon-based material particles is less than or equal to 5 µm.

When the particle size of the carbon-based material particles falls within the foregoing range, complete encapsulation of the silicon-containing material particles by the carbon-based material particles can be promoted, and the particle size of the finished silicon-carbon composite material can be controlled within the suitable range, thereby meeting performance requirements of electrode plate processing, and enhancing the storage performance and kinetic properties of the battery.

In any embodiment, the silicon-containing material particles include at least one of elemental silicon, a silicon-oxygen material, a silicon-carbon material, and a silicon-metal alloy. Optionally, the silicon-containing material particles include a silicon-carbon material.

In any embodiment, the carbon-based material particles include at least one of artificial graphite and natural graphite. Optionally, the carbon-based material particles include artificial graphite.

In any embodiment, the silicon-containing material particles include a carbon substrate having a pore structure and a silicon-based material disposed in the pore structure of the carbon substrate.

The pore structure of the carbon substrate provides attachment sites for the silicon-based material, and enables high-capacity silicon loading. The silicon-based material uniformly dispersed in the pore structure of the carbon substrate is less prone to aggregation. Further, the carbon substrate helps mitigate a volume change of the silicon-based material disposed in the pore structure during lithiation/delithiation, and can withstand stress caused by the volume change of the silicon-based material, thereby endowing the silicon-containing material particles with a low expansion rate and a highly stable structure. In this way, the capacity, storage performance, and cycling stability of the silicon-containing material particles are enhanced. The inner region of the silicon-carbon composite material includes the silicon-containing material particles of the foregoing structure, which not only enhances the capacity of the battery but also avoids fracture of the silicon-carbon composite material caused by excessive volume expansion of the inner region during cycling. Consequently, the storage performance and cycling stability of the battery are enhanced.

In any embodiment, the pore structure includes micropores with a pore size less than 2 nm, mesopores with a pore size ranging from 2 nm to 50 nm, and macropores with a pore size greater than 50 nm.

The carbon substrate having the foregoing pore structure facilitates attachment of the silicon-based material within the pore structure, and can effectively restrict the volume expansion of the silicon-based material attached within the pore structure. Furthermore, the expanded silicon-based material basically does not cause damage to the pore structure of the carbon substrate, thereby enhancing the capacity of the silicon-containing material particles and ensuring the structural stability.

In any embodiment, a pore volume of the micropores is greater than or equal to 0.5 cm³/g, and optionally, 0.6 cm³/g to 0.9 cm³/g.

By controlling the pore volume of the micropores in the carbon substrate, a silicon-containing precursor can enter the pore structure of the carbon substrate, thereby reducing the risk of silica deposition on the surface of the carbon substrate, and enhancing the gram capacity and storage performance of the silicon-containing material particles.

In any embodiment, an average pore size of the carbon substrate is less than or equal to 5 nm, and optionally, 1 nm to 3.5 nm.

When the average pore size of the carbon substrate falls within the foregoing range, attachment of the silicon-based material is promoted. Furthermore, the carbon substrate can restrict the volume expansion of the silicon-based material attached within the pore, and the expanded silicon-based material does not cause damage to the porous carbon matrix structure, thereby enhancing the capacity and structural stability of the silicon-containing material particles, and endowing the battery with excellent storage performance and cycling stability.

In any embodiment, a specific surface area of the carbon substrate is greater than or equal to 1,200 m²/g, and optionally, 1,500 m²/g to 1,800 m²/g.

When the specific surface area of the carbon substrate falls within the foregoing range, the carbon substrate has a large pore volume and provides more deposition sites for the silicon-based material, which contributes to enhancing the gram capacity of the silicon-containing material particles.

In any embodiment, the silicon-based material includes at least one of elemental silicon, a silicon-oxygen material, a silicon-carbon material, and a silicon-metal alloy; and the carbon substrate includes at least one of graphite, soft carbon, and hard carbon.

In any embodiment, the silicon-based material particles include silicon grains. Optionally, a size of the silicon grains is less than or equal to 10 nm. Optionally, the size of the silicon grains is less than or equal to 3 nm.

When the size of the silicon grains falls within the foregoing range, excessive local silicon enrichment caused by an excessively large grain size can be avoided. This prevents relatively large expansion of the silicon-containing material particles during lithiation/delithiation, thereby effectively mitigating material fracture and enhancing the storage performance and cycling stability of the battery.

In any embodiment, a porosity of the silicon-carbon composite material is 20% to 45%, and optionally, 20% to 35%.

When the porosity of the silicon-carbon composite material falls within the foregoing range, a space is reserved for a volume change of the silicon-based material particles in the inner region during lithiation/delithiation. In this way, the structural stability of the silicon-carbon composite material can be enhanced while an excellent gram capacity is achieved, and further the energy density, storage performance, and cycling stability of the battery are enhanced.

In any embodiment, a volume-based median particle size Dv50 of the silicon-carbon composite material is less than or equal to 16 µm, and optionally, 8 µm to 16 µm.

When the Dv50 of the silicon-carbon composite material falls within the foregoing range, the material has excellent kinetic properties and electrode plate processing performance, which contributes to enhancing the storage performance and cycling stability of the battery.

In any embodiment, a particle size distribution span (Dv90-Dv10)/Dv50 of the silicon-carbon composite material ranges from 0.5 to 1.8, and optionally, from 0.8 to 1.5.

When the particle size distribution span of the silicon-carbon composite material falls within the foregoing range, the overall average particle size of the silicon-carbon composite material is relatively moderate, and the particle size distribution is relatively uniform, which contributes to enhancing homogeneity in the overall performance of the silicon-carbon composite material.

In any embodiment, a powder compaction density of the silicon-carbon composite material under 49,000N is 0.7 g/cm³ to 1.3 g/cm³, and optionally, 0.95 g/cm³ to 1.1 g/cm³.

When the powder compaction density of the silicon-carbon composite material falls within the foregoing range, a negative electrode plate has large compaction density, thereby further enhancing the energy density of the battery. In addition, a negative electrode film layer exhibits relatively strong capability of maintaining a pore channel structure during cycling, and the negative electrode plate demonstrates enhanced electrolyte solution wettability, both of which contribute to enhancing the storage performance and cycling stability of the battery.

In any embodiment, a specific surface area of the silicon-carbon composite material is less than or equal to 6 m²/g, and optionally, less than or equal to 4.5 m²/g.

When the specific surface area of the silicon-carbon composite material falls within the foregoing range, it helps further reduce a contact area between the silicon-carbon composite material and the electrolyte solution, thereby reducing consumption of active ions caused by SEI film formation, and enhancing the initial Coulombic efficiency, storage performance, and cycling stability of the battery.

A second aspect of the present application provides a preparation method of a silicon-carbon composite material, which includes the following steps: providing silicon-containing material particles and carbon-based material particles; performing first spray granulation on the silicon-containing material particles and a binder to obtain a first intermediate product; spraying the carbon-based material particles onto the surface of the first intermediate product for second spray granulation to prepare a silicon-carbon composite material, where the silicon-carbon composite material includes an inner region and an outer region, the inner region mainly includes the silicon-containing material particles, and the outer region mainly includes the carbon-based material particles.

The first spray granulation is performed on the silicon-containing material particles and the binder, so that the particle size of the silicon-containing material particles in the inner region of the silicon-carbon composite material can be controlled, and the first intermediate product in which an outer part of the silicon-containing material particles is uniformly wrapped with the binder is obtained. The carbon-based material particles are sprayed onto the surface of the first intermediate product for the second spray granulation, so that secondary particles in which an inner part mainly includes the silicon-containing material particles while an outer part mainly includes the carbon-based material particles can be obtained, where the carbon-based material particles tightly encapsulate the silicon-containing material particles. By means of two-step granulation, compared with a preparation method of simultaneously mixing silicon-containing material particles, a binder, and carbon-based material particles and granulating, the preparation method of the present application can achieve complete encapsulation of the silicon-containing material particles by the carbon-based material particles, to block contact between silicon and an electrolyte solution, and can control a porosity of the silicon-carbon composite material, thereby enhancing the storage performance and cycling stability of a battery.

In any embodiment, the silicon-containing material particles are prepared by the following steps: introducing a gas including a silicon precursor into a carbon substrate having a pore structure; and generating a silicon-based material attached within the pore structure from the silicon precursor by chemical vapor deposition, to obtain the silicon-containing material particles.

In any embodiment, a mass ratio of the silicon-containing particles to the binder is 1:2 to 2:1.

When the mass ratio of the silicon-containing material particles to the binder falls within the foregoing range, a good binding effect is achieved between the silicon-containing material particles and the carbon-based material particles, and the particle size of the finished silicon-carbon composite material is controlled within a suitable range. In this way, the battery has good storage performance and cycling stability and an excellent energy density.

In any embodiment, a mass ratio of the silicon-containing particles to the carbon-based material particles is 1:12 to 1:6.

When the mass ratio of the silicon-containing material particles to the carbon-based material particles falls within the foregoing range, the carbon-based material particles form an integrated coating layer on the surfaces of the silicon-containing material particles, to block contact between silicon and the electrolyte solution. Moreover, excessive coating caused by an excessively high proportion of the carbon-based material particles is avoided, thereby preventing a reduction in a gram capacity of the silicon-carbon composite material. In this way, the battery has an excellent energy density, storage performance, and cycling stability.

In any embodiment, a temperature difference between an inlet air temperature and an outlet air temperature of the first spray granulation is not greater than 60°C.

In spray granulation, a material is dried by hot air, and a dry state of an intermediate product is controlled by controlling the temperature of the hot air. Because the temperature of hot air drying is greatly influenced by the environment, and a chamber only provides certain thermal insulation without heating function, an internal temperature of the chamber represents a temperature range rather than an exact value. Setting the difference between the inlet air temperature and the outlet air temperature within this range can ensure that the internal temperature of the chamber is controlled within a suitable range, and avoid a relatively low actual internal temperature of the chamber due to an excessively large temperature difference.

In any embodiment, the inlet air temperature of the first spray granulation ranges from 110°C to 150°C.

The inlet air temperature serves as an initial heat source in the chamber, and in spray granulation, the material is dried by inlet air, which ensures that the silicon-containing material particles wrapped with the binder are in a semi-dry state. This prevents silicon-containing material particles from becoming too wet and aggregating together due to an excessively low temperature, which may otherwise result in a relatively large particle size of the silicon-containing material in the inner region of the finished silicon-carbon composite material, and consequently lead to a relatively large particle size of the finished silicon-carbon composite material. Conversely, if the temperature is too high, over-drying of the material occurs, thereby hindering a subsequent processing step. When the inlet air temperature falls within the foregoing range, the silicon-carbon composite material has good kinetic properties and electrode plate processing performance.

In any embodiment, the outlet air temperature of the first spray granulation ranges from 50°C to 90°C.

The outlet air temperature is a result of comprehensive consideration of heat, and is determined by the inlet air temperature, a feed rate, and the like. Setting the outlet air temperature of the first spray granulation within this range can avoid a relatively low internal temperature of the chamber due to an excessively large temperature difference between the outlet air temperature and the inlet air temperature, and can further maintain the first intermediate product in the semi-dry state, which facilitates the subsequent processing step for the first intermediate product.

In any embodiment, a feed gas pressure of the first spray granulation ranges from 250 KPa to 350 KPa, and optionally, from 280 KPa to 320 KPa.

The feed gas pressure of the first spray granulation is a critical parameter for controlling the particle size of the finished silicon-carbon composite material. When the feed gas pressure falls within the foregoing range, a number and particle size of sprayed silicon-containing material particles can be controlled within suitable ranges, to avoid an excessively large particle size of the sprayed silicon-containing material particle caused by an excessively low gas pressure, which may otherwise lead to excessively large particle size of the finished silicon-carbon composite material, and deteriorate the kinetic properties and electrode plate processing performance of the silicon-carbon composite material. In addition, a case in which some silicon-containing material particles block a nozzle and cannot be sprayed out due to an excessively large gas pressure can be avoided. When the feed gas pressure of the first spray granulation falls within the foregoing range, the particle size of the sprayed silicon-containing material can be controlled within the suitable range, and the number of the silicon-containing material particles in the inner region of the silicon-carbon composite material is controlled not greater than three at most, which helps enhance the storage performance and electrode plate processing performance of the silicon-carbon composite material.

In any embodiment, a temperature difference between an inlet air temperature and an outlet air temperature of the second spray granulation ranges from 20°C to 40°C.

In any embodiment, the inlet air temperature of the second spray granulation ranges from 170°C to 280°C.

The inlet air temperature of the second spray granulation step is a critical parameter for controlling strength and structural stability of the silicon-carbon composite material. Due to the particular viscosity of the first intermediate product, it needs to rapidly encapsulate the first intermediate product with the carbon-based material particles to form secondary particles and dry the secondary particles, thereby avoiding agglomeration or secondary binding of the first intermediate product and the secondary particles in this process due to an excessively low temperature. In addition, excessively rapid binder shrinkage or binder failure caused by an excessively high temperature, which may otherwise compromise a binding effect, can be avoided. When the inlet air temperature of the second spray granulation falls within this range, the prepared silicon-carbon composite material has a suitable particle size and excellent strength and structural stability, and plays a role in stably enhancing the storage performance and cycling performance during a life cycle of the battery.

In any embodiment, the outlet air temperature of the second spray granulation ranges from 130°C to 240°C.

In any embodiment, a feed gas pressure of the second spray granulation ranges from 150 KPa to 260 KPa, and optionally, from 180 KPa to 210 KPa.

The feed gas pressure of the second spray granulation is a critical parameter for controlling integrity and uniformity of encapsulation of the silicon-containing material particles by the carbon-based material particles. When the feed gas pressure of the second spray granulation falls within the foregoing range, the storage performance and cycling stability of the battery can be enhanced. This not only helps prevent excessive encapsulation of the outer part of the silicon-containing material by the carbon-based material particles, caused by an excessively high feed rate resulting from an excessively high gas pressure, which may otherwise lead to a relatively large particle size of the finished silicon-carbon composite material, and deteriorate the kinetic properties, electrode plate processing performance, and gram capacity of the silicon-carbon composite material, but also helps avoid insufficient encapsulation of some silicon-containing material particles by the carbon-based material particles due to an excessively low feed rate caused by an excessively low gas pressure, which may otherwise cause failure in complete blocking of the contact between silicon and the electrolyte solution, and degradation of the storage performance of the silicon-carbon composite material.

In any embodiment, the preparation method of the silicon-carbon composite material further includes: after the second spray granulation, introducing a gaseous carbon source, and performing carbonization after vapor-phase coating to obtain the silicon-carbon composite material.

The secondary particles formed by coating the silicon-containing material particles with the carbon-based material particles have relatively more concavo-convex surfaces and a relatively large specific surface area. After carbon coating, the specific surface area of the silicon-carbon composite material can be controlled within a suitable range, thereby endowing the battery with excellent storage performance, cycling stability, and initial Coulombic efficiency. Moreover, the carbon coating layer in the outer region can further reduce a possibility that the silicon is in contact with the electrolyte solution, thereby further enhancing the storage performance of the battery.

In any embodiment, the gaseous carbon source includes a gaseous hydrocarbon, and optionally, is at least one of methane, ethylene, and acetylene.

A temperature at which the foregoing gaseous carbon source decomposes to form a carbon coating layer falls within a suitable range and meets requirements of components of the silicon-carbon composite material for temperature.

In any embodiment, a carbonization temperature ranges from 400°C to 800°C.

When the carbonization temperature falls within the foregoing range, the gaseous carbon source can decompose to generate a carbide that covers the surfaces of the secondary particles to form the carbon coating layer. This not only reduces the specific surface area of the secondary particles, but also blocks contact between silicon and the electrolyte solution, thereby enhancing the storage performance and cycling stability of the battery. Moreover, this also inhibits the formation of non-capacitive silicon carbide from silicon of the silicon-containing material particles at excessively high temperatures, thereby avoiding a loss in the gram capacity of the silicon-carbon composite material.

In any embodiment, carbonization time is 0.2 h to 2 h.

When the carbonization time falls within the foregoing range, the silicon-carbon composite material has a suitable specific surface area and an excellent capacity. This can not only help avoid insufficient amorphous carbon coating caused by excessively short carbonization time, which may otherwise result in incomplete coverage of the surfaces of the secondary particles and a failure in reduction of the specific surface area, but also reduce the risk of generating silicon carbide, which may occur when silicon is exposed to high temperatures for a long time, thereby avoiding a loss in the capacity of the silicon-carbon composite material.

In any embodiment, a protective gas during carbonization is nitrogen or argon. Optionally, a gas flow ratio of the gaseous carbon source to the protective gas is 1:5 to 1:1.5.

When the gas flow ratio of the gaseous carbon source to the protective gas falls within the foregoing range, the silicon-carbon composite material has excellent processing efficiency and a suitable specific surface area. This not only avoids relatively long coating time and low production efficiency caused by an excessively low gas flow ratio, but also prevents excessively rapid decomposition of the gaseous carbon source caused by an excessively high gas flow ratio, which may otherwise result in local enrichment on the surfaces of the secondary particles, failure in formation of an uniform amorphous carbon coating layer, and ineffective reduction in the specific surface area of the silicon-carbon composite material.

In any embodiment, the binder includes at least one of phenolic resin, styrene butadiene rubber, polyacrylic acid, carboxymethyl cellulose, sodium alginate, carboxymethyl chitosan, polyacrylonitrile, and polyvinyl alcohol.

The foregoing binder can provide a binding force between the silicon-containing material particles and the carbon-based material particles, and can undergo thermal shrinkage in the second spray granulation step to form voids, and retain functional groups that exert binding performance and remove volatiles in the carbonization step. As a result, the silicon-carbon composite material has a specific porosity, a space is reserved for the expansion of the silicon-containing material particles, and the storage performance and cycling stability of the battery are enhanced.

A third aspect of the present application provides a secondary battery, which includes a negative electrode plate. The negative electrode plate includes the silicon-carbon composite material according to the first aspect or a silicon-carbon composite material prepared by the preparation method according to the second aspect.

A fourth aspect of the present application further provides a power consuming apparatus, which includes the secondary battery according to the third aspect.

### BRIEF DESCRIPTION OF THE DRAWINGS

FIG. 1 is a schematic diagram of a secondary battery according to an embodiment of the present application;
FIG. 2 is an exploded view of the secondary battery according to the embodiment of the present application as shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to the embodiment of the present application as shown in FIG. 4; and
FIG. 6 is a schematic diagram of a power consuming apparatus powered by a secondary battery according to an embodiment of the present application.

Descriptions of reference numerals:
1: battery pack; 2: upper box body; 3: lower box body; 4: battery module; 5: secondary battery; 51: case; 52: electrode assembly; and 53: cover plate.

### DETAILED DESCRIPTION

Embodiments of a silicon-carbon composite material, a preparation method, a secondary battery, and a power consuming apparatus are specifically disclosed in detail below with appropriate reference to detailed descriptions of the accompanying drawings. However, unnecessary detailed descriptions may be omitted. For example, detailed descriptions of well-known matters and repeated descriptions of actually identical structures are omitted. This is to avoid unnecessary redundancy in the following descriptions and to facilitate the understanding by those skilled in the art. In addition, the accompanying drawings and subsequent descriptions are provided for those skilled in the art to fully understand the present application, and are not intended to limit the subject matter recited in the claims.

A "range" disclosed in the present application is defined in the form of a lower limit and an upper limit, and a given range is defined by selecting a lower limit and an upper limit, and the selected lower limit and upper limit define boundaries of a particular range. A range defined in this manner may include or exclude end values, and may be arbitrarily combined, that is, any lower limit may be combined with any upper limit to form a range. For example, if ranges of 60 to 120 and 80 to 110 are listed for a particular parameter, it is contemplated that ranges of 60 to 110 and 80 to 120 are also included. Additionally, if minimum range values of 1 and 2 are listed and maximum range values of 3, 4, and 5 are listed, the following ranges may all be contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably, sequentially. For example, a method includes step (a) and step (b), indicating that the method may include step (a) and step (b) performed sequentially, or may include step (b) and step (a) performed sequentially. For example, reference to "the method may further include step (c)" indicates that step (c) may be added to the method in any order, for example, the method may include step (a), step (b), and step (c), or may include step (a), step (c), and step (b), or may include step (c), step (a), and step (b), or the like.

Unless otherwise specified, "comprise" and "include" mentioned in the present application indicate open inclusion or closed inclusion. For example, "comprise" and "include" may indicate that other components not listed may further be comprised or included, or only listed components may be comprised or included.

Unless otherwise specified, in the present application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

With expansion of the scope of application of secondary batteries, requirements for performance, such as an energy density, of the secondary battery are increasingly high. A negative electrode active material has a significant impact on the energy density of the secondary battery. A silicon-carbon composite material, as a novel negative electrode material, can effectively enhance an energy density of a battery, and is widely researched. However, in a conventional silicon-carbon composite material, a silicon-containing material and a carbon-based material are usually in a uniform distribution state or a direct mixing state. That is, a part of the silicon-carbon composite material that is in contact with an electrolyte solution also contains silicon. As a result, continuous reactions occur between silicon and the electrolyte solution, consuming active ions and deteriorating the storage performance and cycling performance of a battery.

### [Silicon-carbon composite material]

Based on this, the present application provides a silicon-carbon composite material. The silicon-carbon composite material includes an inner region and an outer region, the inner region mainly includes silicon-containing material particles, and the outer region mainly includes carbon-based material particles.

In some embodiments, the silicon-containing material particles include at least one of elemental silicon, a silicon-oxygen material, a silicon-carbon material, and a silicon-metal alloy.

In some embodiments, the silicon-containing material particles include a silicon-carbon material.

In some embodiments, the carbon-based material particles include at least one of artificial graphite and natural graphite.

In some embodiments, the carbon-based material particles include artificial graphite.

Herein, the term "silicon-carbon composite material" refers to a composite material including two elements, namely, silicon and carbon.

Compared with a carbon-based material, silicon has a higher specific capacity. However, high surface reactivity of silicon tends to cause decomposition of an electrolyte solution on the surface of a silicon negative electrode, leading to degradation of the storage performance of the silicon negative electrode. Furthermore, the lithium storage mechanism of the silicon negative electrode involves significant volume expansion and shrinkage of the silicon negative electrode during lithiation/delithiation. This not only deteriorates the cycling performance of a battery, but also causes continuous fracture and reformation of a solid electrolyte interphase (SEI) film, leading to persistent consumption of active ions and further deterioration of the storage performance of the battery. Compared with silicon, a carbon-based material has low surface activity and high structural stability, but is incapable of enhancing an energy density of a battery. Therefore, according to the silicon-carbon composite material provided in the present application, the silicon-containing material with a high capacity and the carbon-based material having a long storage life are used to form secondary particles in which an inner region mainly includes the silicon-containing material particles while an outer region mainly includes the carbon-based material particles. This structure endows a battery with an excellent energy density. Meanwhile, the storage performance of the battery is enhanced by reducing the surface activity of the silicon-carbon composite material and blocking contact between silicon and an electrolyte solution. In addition, the carbon-based material particles in the outer region have a relatively high strength, which helps suppress the volume expansion of the silicon-containing material particles, thereby enhancing the structural stability of the silicon-carbon composite material and further enhancing the cycling stability of the battery.

Compared with a silicon-carbon composite material including secondary particles in which silicon-containing material particles and carbon-based material particles are directly mixed or uniformly distributed, the silicon-carbon composite material of the present application not only blocks contact between silicon and an electrolyte solution, but also reserves a space for volume expansion of the silicon-containing material particles by means of reserving voids, thereby enhancing the storage performance and cycling stability of the battery, and also achieving an excellent energy density.

In some embodiments, a number of the silicon-containing material particles in the inner region is less than or equal to 3, and optionally, 1 or 2.

The number of the silicon-containing material particles in the inner region can be measured by using a method known in the art. As an example, the silicon-carbon composite material is sectioned using an argon ion beam perpendicular to the principal plane of the silicon-carbon composite material, to expose a cross section, and the cross section is photographed using a scanning electron microscope to observe the number of the silicon-containing material particles in the inner region.

In some embodiments, the number of the silicon-containing material particles in the inner region is 1, 2, or 3.

When the number of the silicon-containing material particles in the inner region falls within the foregoing range, the carbon-based material particles densely encapsulate the silicon-containing material particles, and a particle size of the finished silicon-carbon composite material is controlled within a suitable range, thereby reducing contact between silicon and an electrolyte solution and enhancing the kinetic properties of the battery. Meanwhile, the silicon-carbon composite material meets requirements for the processing performance during negative electrode slurry homogenization and negative electrode plate coating, thereby enabling the battery to achieve excellent storage performance, cycling stability, and kinetic properties.

In some embodiments, a mass fraction of silicon in a region located within a distance r/2 from the geometric center of the silicon-carbon composite material is greater than or equal to 30%. In some embodiments, the mass fraction of silicon in the region located within the distance r/2 from the geometric center of the silicon-carbon composite material is 35% to 45%, where r denotes a minor axis of the silicon-carbon composite material.

In some embodiments, a mass fraction of carbon in a region extending inward from the outer surface of the silicon-carbon composite material by a distance r/2 is greater than or equal to 80%. In some embodiments, the mass fraction of carbon in the region extending inward from the outer surface of the silicon-carbon composite material by the distance r/2 is 90% to 100%, where r denotes the minor axis of the silicon-carbon composite material.

The minor axis of the silicon-carbon composite material can be measured by using a three-axis representation method. Specifically, the minor axis r is measured on a planar projection image of a negative electrode material.

The mass fraction of silicon in the region located within the distance r/2 from the geometric center of the silicon-carbon composite material and the mass fraction of carbon in the region extending inward from the outer surface of the silicon-carbon composite material by the distance r/2 can be measured by using methods known in the art. As an example, they are measured by using cross-section polishing (CP) according to the standard GB-T17359-2012. According to a CP elemental mapping of single particles, distribution positions of Si and C can be determined. The silicon or carbon content in a range from the geometric center to 1/2r can be directly measured by selecting a corresponding region of particles. A method for calculating the carbon content in a range from 1/2r to r is as follows: the carbon content in all particles determined by the CP elemental analysis is denoted as A, the carbon content in a range from the circle center to 1/2r is denoted as B, and the carbon content in the range from 1/2r to r is denoted as C. $C = A - B ∗ \frac{π {\left(\frac{1}{2}r\right)}^{2}}{{πr}^{2}}$

In some embodiments, the mass fraction of silicon in the region located within the distance r/2 from the geometric center of the silicon-carbon composite material is 30%, 31%, 32%, 33%, 34%, 35%, 36%, 37%, 38%, 39%, 40%, 41%, 42%, 43%, 44%, 45%, or falls within a value range between any two.

When the mass fraction of silicon in the region located within the distance r/2 from the geometric center of the silicon-carbon composite material falls within the foregoing range, the battery can achieve an excellent energy density, storage performance, and cycling stability.

In some embodiments, the mass fraction of carbon in the region extending inward from the outer surface of the silicon-carbon composite material by the distance r/2 is 80%, 82%, 84%, 86%, 88%, 90%, 92%, 94%, 96%, 98%, 100%, or falls within a value range between any two.

When the mass fraction of carbon in the region extending inward from the outer surface of the silicon-carbon composite material by the distance r/2 falls within the foregoing range, the silicon-carbon composite material can block contact between silicon and the electrolyte solution, and suppress a volume change of silicon during lithiation/delithiation, thereby enhancing the storage performance and cycling stability of the battery.

In some embodiments, the outer region of the silicon-carbon composite material further includes an amorphous carbon coating layer.

Herein, the term "amorphous carbon" refers to a non-crystalline structure composed of carbon. Its mixed sp³/sp² hybridized structure distinguishes it from crystalline carbon in a crystalline system, and the amorphous carbon has a structure and properties similar to amorphous objects (such as glass).

The amorphous carbon herein may be formed by carbonizing a gaseous carbon source. The gaseous carbon source may be a gas that is known in the art and that is suitable for coating, such as at least one of methane, ethylene, and acetylene.

The amorphous carbon coating layer in the outer region can further block contact between silicon and the electrolyte solution, and can reduce a specific surface area of the silicon-carbon composite material. This helps avoid concavo-convex surfaces of the prepared secondary particles, as such concavo-convex surfaces may otherwise lead to an increased specific surface area of the silicon-carbon composite material, enlarged contact area with the electrolyte solution, and greater consumption of active ions due to SEI film formation. As a result, the overall storage performance, cycling stability, and initial Coulombic efficiency of the battery are enhanced.

In some embodiments, the Dv50 of the silicon-containing material particles is greater than or equal to the Dv50 of the carbon-based material particles.

Herein, the terms "Dv50", "Dv90", and "Dv10" refer to particle sizes corresponding to cumulative particle volume distributions reaching 50%, 90%, and 10%, respectively, in a particle size distribution curve.

In the present application, Dv50, Dv90, and Dv10 can be measured by using a method known in the art. As an example, according to the GB/T 19077-2016 "Particle Size Analysis - Laser Diffraction Method", 0.1 g to 0.13 g of sample is placed into a 50 mL beaker, then 5 g of anhydrous ethanol is weighed and placed into the beaker containing the sample, a stirring bar with a length of approximately 2.5 mm is placed, and the beaker is sealed with plastic wrap. The sample is placed in an ultrasonic machine for 5 min, and is transferred to a magnetic mixer for stirring at a speed of 500 r/min for more than 20 min. Two samples are collected from each batch for testing. A particle size distribution is measured, to obtain Dv50, Dv90, and Dv10 of the sample. For example, measurement can be conveniently performed by using a laser particle size analyzer, such as Malvern Mastersizer 3000 laser particle size analyzer from Malvern Panalytical Ltd, UK.

The Dv50 of the silicon-containing material particles is greater than or equal to the Dv50 of the carbon-based material particles, which promotes more complete encapsulation of the silicon-containing material particles by the carbon-based material particles, thereby enhancing the storage performance of the battery.

In some embodiments, the Dv50 of the silicon-containing material particles is less than or equal to 5 µm.

In some embodiments, the Dv50 of the silicon-containing material particles is 1 µm, 2 µm, 3 µm, 4 µm, 5 µm, or falls within a value range between any two.

When the Dv50 of the silicon-containing material particles falls within the foregoing range, the particle size of the finished silicon-carbon composite material is controlled within the suitable range, thereby ensuring good electrode plate processing performance and kinetic properties of the silicon-carbon composite material.

In some embodiments, the Dv50 of the carbon-based material particles is less than or equal to 5 µm.

In some embodiments, the Dv50 of the carbon-based material particles is 1 µm, 2 µm, 3 µm, 4 µm, 5 µm, or falls within a value range between any two.

When the particle size of the carbon-based material particles falls within the foregoing range, complete encapsulation of the silicon-containing material particles by the carbon-based material particles can be promoted, and the particle size of the finished silicon-carbon composite material can be controlled within the suitable range, thereby meeting performance requirements of electrode plate processing, and enhancing the storage performance and kinetic properties of the battery.

In some embodiments, the silicon-containing material particles include a carbon substrate having a pore structure and a silicon-based material disposed in the pore structure of the carbon substrate.

The pore structure of the carbon substrate provides attachment sites for the silicon-based material, and enables high-capacity silicon loading. The silicon-based material uniformly dispersed in the pore structure of the carbon substrate is less prone to aggregation. Further, the carbon substrate helps mitigate a volume change of the silicon-based material disposed in the pore structure during lithiation/delithiation, and can withstand stress caused by the volume change of the silicon-based material, thereby endowing the silicon-containing material particles with a low expansion rate and a highly stable structure. In this way, the capacity, storage performance, and cycling stability of the silicon-containing material particles are enhanced. The inner region of the silicon-carbon composite material includes the silicon-containing material particles of the foregoing structure, which not only enhances the capacity of the battery but also avoids fracture of the silicon-carbon composite material caused by excessive volume expansion of the inner region during cycling. Consequently, the storage performance and cycling stability of the battery are enhanced.

In some embodiments, the carbon substrate includes micropores with a pore size less than 2 nm, mesopores with a pore size ranging from 2 nm to 50 nm, and macropores with a pore size greater than 50 nm.

The pore structure of the carbon substrate can be measured by using a device and method known in the art. For example, the pore size is measured by the gas adsorption method according to the test standards GB/T19587-2017 and GB/T21650.2-2008. Specifically, a porous material sample tube is immersed in liquid nitrogen at -196°C, and nitrogen is adsorbed on the to-be-measured material under a relative pressure of 0 to 1. A pore size distribution of the porous material is characterized based on a relationship map of the pore volume at each level and the corresponding relative pressure, and the pore structure of the carbon substrate is characterized by the pore size distribution.

The carbon substrate having the foregoing pore structure facilitates attachment of the silicon-based material within the pore structure, and can effectively restrict the volume expansion of the silicon-based material attached within the pore structure. Furthermore, the expanded silicon-based material basically does not cause damage to the pore structure of the carbon substrate, thereby enhancing the capacity of the silicon-containing material particles and ensuring the structural stability.

In some embodiments, a pore volume of the micropores is greater than or equal to 0.5 cm³/g. In some embodiments, the pore volume of the micropores is 0.6 cm³/g to 0.9 cm³/g.

The pore volume of the micropores can be measured by an instrument and method well-known in the art. For example, the measurement method may refer to GB/T19587-2004, the BJH (Barrett-Joyner-Halenda) model for mesopore size distribution analysis is employed. Under a micro-mesopore model, the gas adsorption-desorption method is employed for testing, and adsorption branch data is selected. A cumulative pore volume of pores with a pore size less than 2 nm is measured and statistically analyzed.

In some embodiments, the pore volume of the micropores is 0.5 cm³/g, 0.55 cm³/g, 0.6 cm³/g, 0.65 cm³/g, 0.7 cm³/g, 0.75 cm³/g, 0.8 cm³/g, 0.85 cm³/g, 0.9 cm³/g, 0.95 cm³/g, 1 cm³/g or falls within a value range between any two.

By controlling the pore volume of the micropores in the carbon substrate, a silicon-containing precursor can enter the pore structure of the carbon substrate, thereby reducing the risk of silica deposition on the surface of the carbon substrate, and enhancing the gram capacity and storage performance of the silicon-containing material particles.

In some embodiment, an average pore size of the carbon substrate is less than or equal to 5 nm. In some embodiments, the average pore size of the carbon substrate is 1 nm to 3.5 nm.

The average pore size of the carbon substrate can be measured by using a device and method known in the art. For example, the pore size is measured by the gas adsorption method according to the test standards GB/T19587-2017 and GB/T21650.2-2008. Specifically, a porous material sample tube is immersed in liquid nitrogen at -196°C, and nitrogen is adsorbed on the to-be-measured material under a relative pressure of 0 to 1. A pore size distribution of the porous material is characterized based on a relationship map of the pore volume at each level and the corresponding relative pressure, to obtain the average pore size of the carbon substrate.

In some embodiments, the average size of the carbon substrate is 1 nm, 1.5 nm, 2 nm, 2.5 nm, 3 nm, 3.5 nm, 4 nm 4.5 nm, 5 nm, or falls within a value range between any two.

When the average pore size of the carbon substrate falls within the foregoing range, attachment of the silicon-based material is promoted. Furthermore, the carbon substrate can restrict the volume expansion of the silicon-based material attached within the pore, and the expanded silicon-based material does not cause damage to the porous carbon matrix structure, thereby enhancing the capacity and structural stability of the silicon-containing material particles, and endowing the battery with excellent storage performance and cycling stability.

In some embodiments, a specific surface area of the carbon substrate is greater than or equal to 1,200 cm²/g. In some embodiments, the specific surface area of the carbon substrate is 1,500 cm²/g to 1,800 cm²/g.

In the present application, the specific surface area of the carbon substrate can be measured by using a method known in the art. As an example, the specific surface area is measured by using the gas absorption method according to the test standard GB/T19587-2017. Specifically, a sample tube is immersed in liquid nitrogen at -196°C, the nitrogen absorption amount on the surface of the solid is measured under different relative pressures of 0.05 to 0.30, the monolayer adsorption amount of the test sample is calculated based on the BET multilayer adsorption theory and its corresponding equation, and the specific surface area of the solid is calculated. $\frac{p / {p}_{0}}{{n}_{a} \left(1-\frac{p}{{p}_{0}}\right)} = \frac{1}{{n}_{m} C} + \frac{C - 1}{{n}_{m} C} \times \frac{p}{{p}_{0}}$
where nₐ is an amount of adsorbed gas, in a unit of mol/g; p/p₀ is the relative pressure; nₘ is the monolayer adsorption amount.

In some embodiments, the specific surface area of the carbon substrate is 1,200 m²/g, 1,300 m²/g, 1,400 m²/g, 1,500 m²/g, 1,600 m²/g, 1,700 m²/g, 1,800 m²/g, or falls within a value range between any two.

When the specific surface area of the carbon substrate falls within the foregoing range, the carbon substrate has a large pore volume and provides more deposition sites for the silicon-based material, which contributes to enhancing the gram capacity of the silicon-containing material particles.

In some embodiments, the silicon-based material includes at least one of elemental silicon, a silicon-oxygen material, a silicon-carbon material, and a silicon-metal alloy.

In some embodiments, the silicon-based material includes silicon grains.

A crystalline structure of the silicon-based material can be tested by using a device and method known in the art. As an example, the crystalline structure can be tested according to the following steps: a micro grid with a particular diameter (such as 3 mm) is selected, an edge of the micro grid is held by using pointed forceps, a film side of the micro grid is placed upward (a glossy side observed under lamp light being the film side), and the micro grid is gently placed flat on white filter paper; an appropriate amount (such as 1 g) of sample is placed into a beaker containing an appropriate amount of ethanol, and ultrasonic shaking is performed for 10 min to 30 min; the to-be-tested sample is drawn by using a glass capillarity, and 2 or 3 drops are added to the micro grid; after being baked in an oven for 5 min, the micro grid with the to-be-tested sample is placed on a sample stage, and a test is conducted under a transmission electron microscope (such as Hitachi HF-3300S Cs-corrected STEM) at a specific magnification (such as 60,000 times), to obtain a transmission electron microscopy (TEM) image of the to-be-tested sample. If significant lattice fringes (for example, a fringe spacing is approximately equal to 0.331 nm) are observed, the sample is determined as crystalline silicon. If no lattice fringes are observed, the sample is determined as non-crystalline silicon.

In the present application, a size of the silicon grains can be calculated based on an XRD pattern of the sample tested according to the test standard JIS/K0131-1996. Specifically, based on the XRD pattern of the sample, the grain size of the silicon grains is calculated by substituting the full width at half maximum β and diffraction angle θ of the Si(111) crystal plane diffraction peak into the Debye-Scherrer equation. The Debye-Scherer equation is as follows: Dhkl=kλ/(βcosθ), where Dhkl denotes the grain size of the silicon grains, in a unit of nm; k denotes a Scherrer constant, which is 0.89; λ denotes a wave length of an incident X-ray, which is 0.15406 nm; β denotes the full width at half maximum of a diffraction peak, in a unit of rad; and θ denotes a diffraction angle, in a unit of degree.

In some embodiments, the size of the silicon grains is less than or equal to 10 nm. In some embodiments, the size of the silicon grains is less than or equal to 3 nm.

In some embodiments, the size of the silicon grains is 1 nm, 2 nm, 3 nm, 4 nm, 5 nm, 6 nm, 7 nm, 8 nm, 9 nm, 10 nm, or falls within a value range between any two.

When the size of the silicon grains falls within the foregoing range, excessive local silicon enrichment caused by an excessively large grain size can be avoided. This prevents relatively large expansion of the silicon-containing material particles during lithiation/delithiation, thereby effectively mitigating material fracture and enhancing the storage performance and cycling stability of the battery.

In some embodiments, the silicon-based material includes non-crystalline silicon.

The non-crystalline silicon can be uniformly expanded in all directions, thereby uniformly compressing the carbon substrate. The carbon substrate can effectively mitigate volume expansion of the non-crystalline silicon, thereby enhancing the storage performance and cycling stability of the battery.

In some embodiments, the carbon substrate includes at least one of graphite, soft carbon, and hard carbon.

In some embodiments, the carbon substrate is hard carbon.

In some embodiments, a pore volume of micropores of the hard carbon is greater than or equal to 0.5 cm³/g. In some embodiments, the pore volume of the micropores of the hard carbon is 0.6 cm³/g to 0.9 cm³/g. In some embodiments, a specific surface area of the hard carbon is greater than or equal to 1,200 m²/g. In some embodiments, the specific surface area of the hard carbon is 1,500 cm²/g to 1,800 cm²/g. In some embodiments, an average pore size of the hard carbon is less than or equal to 5 nm. In some embodiments, the average pore size of the hard carbon is 1 nm to 3.5 nm.

When the micropore volume, the specific surface area, and the average pore size of the hard carbon fall within the foregoing ranges, the hard carbon and the silicon-based material that is disposed in the pore structure work together, to enhance the gram capacity and structural stability of the silicon-containing material particles.

In some embodiments, based on the total mass of the silicon-containing material particles, a mass fraction of silicon in the silicon-containing material particles is 35% to 50%. In some embodiments, the mass fraction of silicon in the silicon-containing material particles is 35% to 47%.

In some embodiments, based on the total mass of the silicon-containing material particles, the mass fraction of silicon in the silicon-containing material particles is 35%, 36%, 37%, 38%, 39%, 40%, 41%, 42%, 43%, 44%, 45%, 46%, 47%, 48%, 49%, 50%, or any value in a range formed by any two of the foregoing values.

Based on the total mass of the silicon-containing material particles, the mass fraction of silicon in the silicon-containing material particles falls within the foregoing range, which contributes to enhancing the gram capacity and structural stability of the silicon-carbon composite material, and enhancing the cycling stability and storage performance of the battery.

In some embodiments, a porosity of the silicon-carbon composite material is 20% to 45%. In some embodiments, the porosity of the silicon-carbon composite material is 20% to 35%.

In the present application, the porosity of the silicon-carbon composite material can be measured by using a method known in the art. As an example, the porosity is measured according to the test standard GB/T24586. The porosity P=(V2-V1)/V2*100%, and the apparent volume V2=S*H*A, where S is the area, in a unit of cm²; H is the thickness, in a unit of cm; A is a number of samples, in a unit of EA; V1 is the true volume of the sample, in a unit of cm³; and V2 is the apparent volume of the sample, in a unit of cm³.

A method for calculating the true volume V1 of the sample includes the following steps: the foregoing sample is placed in a true density analyzer (Accu Pyc II 1340 analyzer), the test system is sealed, and helium is introduced according to a program. Gas volumes in a sample detection chamber and an expansion chamber are respectively calculated based on gas pressures in the sample detection chamber and the expansion chamber by using the ideal gas equation (v=nRT/P), and the volume of gas displaced by the sample under particular temperature and pressure conditions is calculated, which is the true volume V1 of the sample.

In some embodiments, the porosity of the silicon-carbon composite material is 20%, 25%, 30%, 35%, 40%, 45%, or falls within a value range between any two.

When the porosity of the silicon-carbon composite material falls within the foregoing range, a space is reserved for a volume change of the silicon-based material particles in the inner region during lithiation/delithiation. In this way, the structural stability of the silicon-carbon composite material can be enhanced while an excellent gram capacity is achieved, and further the energy density, storage performance, and cycling stability of the battery are enhanced.

In some embodiments, the Dv50 of the silicon-carbon composite material is less than or equal to 16 µm. In some embodiments, the Dv50 of the silicon-carbon composite material is 8 µm to 16 µm.

In some embodiments, the Dv50 of the silicon-carbon composite material is 2 µm, 4 µm, 6 µm, 8 µm, 10 µm, 12 µm, 14 µm, 16 µm, or falls within a value range between any two.

When the Dv50 of the silicon-carbon composite material falls within the foregoing range, the material has excellent kinetic properties and electrode plate processing performance, which contributes to enhancing the storage performance and cycling stability of the battery.

In some embodiments, a particle size distribution span (Dv90-Dv10)/Dv50 of the silicon-carbon composite material ranges from 0.5 to 1.8. In some embodiments, the particle size distribution span of the silicon-carbon composite material ranges from 0.8 to 1.5.

In some embodiments, the particle size distribution span (Dv90-Dv10)/Dv50 of the silicon-carbon composite material is 0.5, 0.6, 0.7, 0.8, 0.9, 1.0, 1.1, 1.2, 1.3, 1.4, 1.5, 1.6, 1.7, 1.8, or falls within a value range between any two.

When the particle size distribution span of the silicon-carbon composite material falls within the foregoing range, the overall average particle size of the silicon-carbon composite material is relatively moderate, and the particle size distribution is relatively uniform, which contributes to enhancing homogeneity in the overall performance of the silicon-carbon composite material.

In some embodiments, a powder compaction density of the silicon-carbon composite material under 49,000 N is 0.7 g/cm³ to 1.3 g/cm³. In some embodiments, the powder compaction density of the silicon-carbon composite material under 49,000 N is 0.95 g/cm³ to 1.1 g/cm³.

Herein, the term "powder compaction density" refers to the mass of powder particles in a unit volume under a particular pressure.

In the present application, the powder compaction density of the silicon-carbon composite material under the pressure of 49,000 N can be measured by using a method known in the art. As an example, according to GB/T24533-2009, 1 g of silicon-carbon composite material powder is weighed and added to a mold with the bottom area of 1.327 cm², the mold is compressed to a load of 5,000 kg (equivalent to 49,000 N) and held under the pressure for 30 s, then the pressure is released for 10 s, and the powder compaction density of the silicon-carbon composite material under the pressure of 49,000 N is measured by using an electric pressure tester (such as UTM7305 electric pressure tester).

In some embodiments, the powder compaction density of the silicon-carbon composite material under 49,000 N is 0.7 g/cm³, 0.8 g/cm³, 0.9 g/cm³, 1.0 g/cm³, 1.1 g/cm³, 1.2 g/cm³, 1.3 g/cm³, or falls within a value range between any two.

When the powder compaction density of the silicon-carbon composite material falls within the foregoing range, a negative electrode plate has large compaction density, thereby further enhancing the energy density of the battery. In addition, a negative electrode film layer exhibits relatively strong capability of maintaining a pore channel structure during cycling, and the negative electrode plate demonstrates enhanced electrolyte solution wettability, both of which contribute to enhancing the storage performance and cycling stability of the battery.

In some embodiments, a specific surface area of the silicon-carbon composite material is less than or equal to 6 m²/g. In some embodiments, the specific surface area of the silicon-carbon composite material is less than or equal to 4.5 m²/g.

In some embodiments, the specific surface area of the silicon-carbon composite material is 1 m²/g, 2 m²/g, 3 m²/g, 4 m²/g, 5 m²/g, 6 m²/g, or falls within a value range between any two.

When the specific surface area of the silicon-carbon composite material falls within the foregoing range, it helps further reduce a contact area between the silicon-carbon composite material and the electrolyte solution, thereby reducing consumption of active ions caused by SEI film formation, and enhancing the initial Coulombic efficiency, storage performance, and cycling stability of the battery.

The present application further provides a preparation method of a silicon-carbon composite material, which includes the following step:

provide silicon-containing material particles and carbon-based material particles; perform first spray granulation on the silicon-containing material particles and a binder to obtain a first intermediate product; and spray the carbon-based material particles onto the surface of the first intermediate product for second spray granulation to prepare a silicon-carbon composite material, where the silicon-carbon composite material includes an inner region and an outer region, the inner region mainly includes the silicon-containing material particles, and the outer region mainly includes the carbon-based material particles.

Herein, the term "spray granulation" refers to a granulation method in which a slurry or solution is sprayed into a granulation tower, and under the action of sprayed hot air, the slurry or solution is dried and agglomerated, to obtain spherical granules. The method is widely used to produce catalysts with various particle sizes or other particles having requirements for the particle size. It is suitable for experiments and small-scale production and use, and can produce particles with high sphericity and uniform particle sizes.

The first spray granulation is performed on the silicon-containing material particles and the binder, so that the particle size of the silicon-containing material particles in the inner region of the silicon-carbon composite material can be controlled, and the first intermediate product in which an outer part of the silicon-containing material particles is uniformly wrapped with the binder is obtained. The carbon-based material particles are sprayed onto the surface of the first intermediate product for the second spray granulation, so that secondary particles in which an inner part mainly includes the silicon-containing material particles while an outer part mainly includes the carbon-based material particles can be obtained, where the carbon-based material particles tightly encapsulate the silicon-containing material particles. By means of two-step granulation, compared with a preparation method of simultaneously mixing silicon-containing material particles, a binder, and carbon-based material particles and granulating, the preparation method of the present application can achieve complete encapsulation of the silicon-containing material particles by the carbon-based material particles, to block contact between silicon and an electrolyte solution, and can control a porosity of the silicon-carbon composite material, thereby enhancing the storage performance and cycling stability of a battery.

In some embodiments, the silicon-containing material particles are prepared by the following steps: a gas including a silicon precursor is introduced into a carbon substrate having a pore structure; and a silicon-based material attached within the pore structure is generated from the silicon precursor by chemical vapor deposition, to obtain the silicon-containing material particles.

In some embodiments, the silicon precursor includes at least one of silane, dichlorosilane, trichlorosilane, and tetrachlorosilane.

In some embodiments, the silicon precursor is silane.

In some embodiments, a mass ratio of the silicon-containing material particles to the binder is 1:2 to 2:1.

In some embodiments, the mass ratio of the silicon-containing material particles to the binder is 1:2, 1.5:2, 1:1, 1.5:1, 2:1, or falls within a value range between any two.

When the mass ratio of the silicon-containing material particles to the binder falls within the foregoing range, a good binding effect is achieved between the silicon-containing material particles and the carbon-based material particles, and the particle size of the finished silicon-carbon composite material is controlled within a suitable range. In this way, the battery has good storage performance and cycling stability and an excellent energy density.

In some embodiments, a mass ratio of the silicon-containing material particles to the carbon-based material particles is 1:12 to 1:6.

In some embodiments, the mass ratio of the silicon-containing material particles to the carbon-based material particles is 1:12, 1:11, 1:10, 1:9, 1:8, 1:7, 1:6, or falls within a value range between any two.

When the mass ratio of the silicon-containing material particles to the carbon-based material particles falls within the foregoing range, the carbon-based material particles form an integrated coating layer on the surfaces of the silicon-containing material particles, to block contact between silicon and the electrolyte solution. Moreover, excessive coating caused by an excessively high proportion of the carbon-based material particles is avoided, thereby preventing a reduction in a gram capacity of the silicon-carbon composite material. In this way, the battery has an excellent energy density, storage performance, and cycling stability.

In some embodiments, a temperature difference between an inlet air temperature and an outlet air temperature of the first spray granulation is not greater than 60°C.

In some embodiments, the temperature difference between the inlet air temperature and the outlet air temperature of the first spray granulation is 10°C, 20°C, 30°C, 40°C, 50°C, 60°C, or falls within a value range between any two.

In spray granulation, a material is dried by hot air, and a dry state of an intermediate product is controlled by controlling the temperature of the hot air. Because the temperature of hot air drying is greatly influenced by the environment, and a chamber only provides certain thermal insulation without heating function, an internal temperature of the chamber represents a temperature range rather than an exact value. Setting the difference between the inlet air temperature and the outlet air temperature within this range can ensure that the internal temperature of the chamber is controlled within a suitable range, and avoid a relatively low actual internal temperature of the chamber due to an excessively large temperature difference.

In some embodiments, the inlet air temperature ranges from 110°C to 150°C.

In some embodiments, the inlet air temperature is 110°C, 120°C, 130°C, 140°C, 150°C, or falls within a value range between any two.

The inlet air temperature serves as an initial heat source in the chamber, and in spray granulation, the material is dried by inlet air, which ensures that the silicon-containing material particles wrapped with the binder are in a semi-dry state. This prevents silicon-containing material particles from becoming too wet and aggregating together due to an excessively low temperature, which may otherwise result in a relatively large particle size of the silicon-containing material in the inner region of the finished silicon-carbon composite material, and consequently lead to a relatively large particle size of the finished silicon-carbon composite material. Conversely, if the temperature is too high, over-drying of the material occurs, thereby hindering a subsequent processing step. When the inlet air temperature falls within the foregoing range, the silicon-carbon composite material has good kinetic properties and electrode plate processing performance.

In some embodiments, the outlet air temperature ranges from 50°C to 90°C.

In some embodiments, the outlet air temperature is 50°C, 60°C, 70°C, 80°C, 90°C, or falls within a value range between any two.

The outlet air temperature is a result of comprehensive consideration of heat, and is determined by the inlet air temperature, a feed rate, and the like. Setting the outlet air temperature of the first spray granulation within this range can avoid a relatively low internal temperature of the chamber due to an excessively large temperature difference between the outlet air temperature and the inlet air temperature, and can further maintain the first intermediate product in the semi-dry state, which facilitates the subsequent processing step for the first intermediate product.

In some embodiments, a feed gas pressure of the first spray granulation ranges from 250 Kpa to 350 Kpa. In some embodiments, the feed gas pressure of the first spray granulation ranges from 280 KPa to 320 KPa.

In some embodiments, the feed gas pressure of the first spray granulation is 250 Kpa, 251 Kpa, 252 Kpa, 253 Kpa, 254 Kpa, 255 Kpa, 256 Kpa, 257 Kpa, 258 Kpa, 259 Kpa, 260 Kpa, or falls within a value range between any two.

The feed gas pressure of the first spray granulation is a critical parameter for controlling the particle size of the finished silicon-carbon composite material. When the feed gas pressure falls within the foregoing range, a number and particle size of sprayed silicon-containing material particles can be controlled within suitable ranges, to avoid an excessively large particle size of the sprayed silicon-containing material particle caused by an excessively low gas pressure, which may otherwise lead to excessively large particle size of the finished silicon-carbon composite material, and deteriorate the kinetic properties and electrode plate processing performance of the silicon-carbon composite material. In addition, a case in which some silicon-containing material particles block a nozzle and cannot be sprayed out due to an excessively large gas pressure can be avoided. When the feed gas pressure of the first spray granulation falls within the foregoing range, the particle size of the sprayed silicon-containing material can be controlled within the suitable range, and the number of the silicon-containing material particles in the inner region of the silicon-carbon composite material is controlled not greater than three at most, which helps enhance the storage performance and electrode plate processing performance of the silicon-carbon composite material.

In some embodiments, a temperature difference between an inlet air temperature and an outlet air temperature of the second spray granulation ranges from 20°C to 40°C.

In some embodiments, the temperature difference between the inlet air temperature and the outlet air temperature of the second spray granulation is 20°C, 24°C, 28°C, 32°C, 36°C, 40°C, or falls within a value range between any two.

In some embodiments, the inlet air temperature of the second spray granulation ranges from 170°C to 280°C.

In some embodiments, the inlet air temperature of the second spray granulation is 170°C, 180°C, 190°C, 200°C, 210°C, 220°C, 230°C, 240°C, 250°C, 260°C, 270°C, 280°C, or falls within a value range between any two.

The inlet air temperature of the second spray granulation step is a critical parameter for controlling strength and structural stability of the silicon-carbon composite material. Due to the particular viscosity of the first intermediate product, it needs to rapidly encapsulate the first intermediate product with the carbon-based material particles to form secondary particles and dry the secondary particles, thereby avoiding agglomeration or secondary binding of the first intermediate product and the secondary particles in this process due to an excessively low temperature. In addition, excessively rapid binder shrinkage or binder failure caused by an excessively high temperature, which may otherwise compromise a binding effect, can be avoided. When the inlet air temperature of the second spray granulation falls within this range, the prepared silicon-carbon composite material has a suitable particle size and excellent strength and structural stability, and plays a role in stably enhancing the storage performance and cycling performance during a life cycle of the battery.

In some embodiments, the outlet air temperature of the second spray granulation ranges from 130°C to 240°C.

In some embodiments, the outlet air temperature of the second spray granulation is 130°C, 140°C, 150°C, 160°C, 170°C, 180°C, 190°C, 200°C, 210°C, 220°C, 230°C, 240°C, or falls within a value range between any two.

In some embodiments, a feed gas pressure of the second spray granulation ranges from 150 KPa to 260 Kpa. In some embodiments, the feed gas pressure of the second spray granulation ranges from 180 KPa to 210 KPa.

In some embodiments, the feed gas pressure of the second spray granulation is 150 Kpa, 160 Kpa, 170 Kpa, 180 Kpa, 190 Kpa, 200 Kpa, 210 Kpa, 220 Kpa, 230 Kpa, 240 Kpa, 250 Kpa, 260 Kpa, or falls within a value range between any two.

The feed gas pressure of the second spray granulation is a critical parameter for controlling integrity and uniformity of encapsulation of the silicon-containing material particles by the carbon-based material particles. When the feed gas pressure of the second spray granulation falls within the foregoing range, the storage performance and cycling stability of the battery can be enhanced. This not only helps prevent excessive encapsulation of the outer part of the silicon-containing material by the carbon-based material particles, caused by an excessively high feed rate resulting from an excessively high gas pressure, which may otherwise lead to a relatively large particle size of the finished silicon-carbon composite material, and deteriorate the kinetic properties, electrode plate processing performance, and gram capacity of the silicon-carbon composite material, but also helps avoid insufficient encapsulation of some silicon-containing material particles by the carbon-based material particles due to an excessively low feed rate caused by an excessively low gas pressure, which may otherwise cause failure in complete blocking of the contact between silicon and the electrolyte solution, and degradation of the storage performance of the silicon-carbon composite material.

In some embodiments, the preparation method of the silicon-carbon composite material further includes: after the second spray granulation, introduce a gaseous carbon source, and perform carbonization after vapor-phase coating to obtain the silicon-carbon composite material.

The secondary particles formed by coating the silicon-containing material particles with the carbon-based material particles have relatively more concavo-convex surfaces and a relatively large specific surface area. After carbon coating, the specific surface area of the silicon-carbon composite material can be controlled within a suitable range, thereby endowing the battery with excellent storage performance, cycling stability, and initial Coulombic efficiency. Moreover, the carbon coating layer in the outer region can further reduce a possibility that the silicon is in contact with the electrolyte solution, thereby further enhancing the storage performance of the battery.

In some embodiments, the gaseous carbon source includes a gaseous hydrocarbon, and optionally, is at least one of methane, ethylene, and acetylene.

In some embodiments, the gaseous carbon source is acetylene.

A temperature at which the foregoing gaseous carbon source decomposes to form a carbon coating layer falls within a suitable range and meets requirements of components of the silicon-carbon composite material for temperature.

In some embodiments, a carbonization temperature ranges from 400°C to 800°C.

In some embodiments, the carbonization temperature is 400°C, 500°C, 600°C, 700°C, 800°C, or falls within a value range between any two.

When the carbonization temperature falls within the foregoing range, the gaseous carbon source can decompose to generate a carbide that covers the surfaces of the secondary particles to form the carbon coating layer. This not only reduces the specific surface area of the secondary particles, but also blocks contact between silicon and the electrolyte solution, thereby enhancing the storage performance and cycling stability of the battery. Moreover, this also inhibits the formation of non-capacitive silicon carbide from silicon of the silicon-containing material particles at excessively high temperatures, thereby avoiding a loss in the gram capacity of the silicon-carbon composite material.

In some embodiments, carbonization time is 0.2 h to 2 h.

In some embodiments, the carbonization time is 0.2 h, 0.3 h, 0.4 h, 0.5 h, 0.6 h, 0.7 h, 0.8 h, 0.9 h, 1 h, 1.1 h, 1.2 h, 1.3 h, 1.4 h, 1.5 h, 1.6 h, 1.7 h, 1.8 h, 1.9 h, 2 h, or falls within a value range between any two.

When the carbonization time falls within the foregoing range, the silicon-carbon composite material has a suitable specific surface area and an excellent capacity. This can not only help avoid insufficient amorphous carbon coating caused by excessively short carbonization time, which may otherwise result in incomplete coverage of the surfaces of the secondary particles and a failure in reduction of the specific surface area, but also reduce the risk of generating silicon carbide, which may occur when silicon is exposed to high temperatures for a long time, thereby avoiding a loss in the capacity of the silicon-carbon composite material.

In some embodiments, a protective gas during carbonization is nitrogen or argon. In some embodiments, a gas flow ratio of the gaseous carbon source to the protective gas ranges is 1:5 to 1:1.5.

In some embodiments, the gas flow ratio of the gaseous carbon source to the protective gas is 1:5, 1:4.5, 1:4, 1:3.5, 1:3, 1:2.5, 1:2, 1:1.5, or falls within a value range between any two.

When the gas flow ratio of the gaseous carbon source to the protective gas falls within the foregoing range, the silicon-carbon composite material has excellent processing efficiency and a suitable specific surface area. This not only avoids relatively long coating time and low production efficiency caused by an excessively low gas flow ratio, but also prevents excessively rapid decomposition of the gaseous carbon source caused by an excessively high gas flow ratio, which may otherwise result in local enrichment on the surfaces of the secondary particles, failure in formation of an uniform amorphous carbon coating layer, and ineffective reduction in the specific surface area of the silicon-carbon composite material.

In some embodiments, the binder includes at least one of phenolic resin, styrene butadiene rubber, polyacrylic acid, carboxymethyl cellulose, sodium alginate, carboxymethyl chitosan, polyacrylonitrile, and polyvinyl alcohol.

In some embodiments, the binder includes phenolic resin.

The foregoing binder can provide a binding force between the silicon-containing material particles and the carbon-based material particles, and can undergo thermal shrinkage in the second spray granulation step to form voids, and retain functional groups that exert binding performance and remove volatiles in the carbonization step. As a result, the silicon-carbon composite material has a specific porosity, a space is reserved for the expansion of the silicon-containing material particles, and the storage performance and cycling stability of the battery are enhanced.

### [Negative electrode plate]

A negative electrode plate includes a negative electrode current collector and a negative electrode film layer disposed on at least one surface of the negative electrode current collector. The negative electrode film layer includes a negative electrode active material, and the negative electrode active material includes the silicon-carbon composite material according to some embodiments or a silicon-carbon composite material prepared by the preparation method according to some embodiments.

As an example, the negative electrode current collector has two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, the metal foil may be a copper foil. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver, a silver alloy, or the like) on the polymer material substrate (a substrate such as polypropylene (PP), polyethylene terephthalate (PET), polybutylene terephthalate (PBT), polystyrene (PS), or polyethylene (PE)).

In some embodiments, the negative electrode film layer further optionally includes a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another additive such as a thickener (such as sodium carboxymethyl cellulose (CMC-Na)).

In some embodiments, the negative electrode plate can be prepared by the following method: the components for preparing the negative electrode plate, such as the negative electrode active material, the conductive agent, the binder, and any other component, are dispersed in a solvent (such as deionized water) to form a negative electrode slurry; and the negative electrode slurry is coated onto the negative electrode current collector, and processes, such as drying and cold pressing, are performed to obtain the negative electrode plate.

### [Positive electrode plate]

A positive electrode plate includes a positive electrode current collector and a positive electrode film layer disposed on at least one surface of the positive electrode current collector. The positive electrode film layer includes a positive electrode active material.

As an example, the positive electrode current collector has two opposite surfaces in a thickness direction of the positive electrode current collector, and the positive electrode film layer is disposed on either or both of the two opposite surfaces of the positive electrode current collector.

In some embodiments, the positive electrode current collector may be a metal foil or a composite current collector. For example, the metal foil may be an aluminum foil. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver, a silver alloy, or the like) on the polymer material substrate (a substrate such as polypropylene (PP), polyethylene terephthalate (PET), polybutylene terephthalate (PBT), polystyrene (PS), or polyethylene (PE)).

In some embodiments, the positive electrode active material may be a positive electrode active material well-known in the art and used in a battery. As an example, the positive electrode active material may include at least one of the following materials: a lithium-containing phosphate of an olivine structure, a lithium transition metal oxide, and modified compounds thereof. However, the present application is not limited to these materials, and other conventional materials that can be used as positive electrode active materials in batteries may also be used. These positive electrode active materials may be used alone or in combination. Examples of the lithium transition metal oxide may include, but are not limited to, at least one of a lithium cobalt oxide (such as LiCoO₂), a lithium-nickel oxide (such as LiNiO₂), a lithium-manganese oxide (such as LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (which may also be referred to as NCM₃₃₃ for short)), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), and LiNi_{0.8}Co_{0.1}Mn_{0.1}O₂ (which may also be referred to as NCM₈₁₁ for short)), a lithium-nickel-cobalt-aluminum oxide (such as LiNi_{0.85}Co_{0.15}Al_{0.05}O₂), and modified compounds thereof. Examples of the lithium-containing phosphate of the olivine structure may include, but are not limited to, at least one of lithium iron phosphate (such as LiFePO₄ (which may also be referred to as LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by the following method: the components for preparing the positive electrode plate, such as the positive electrode active material, the conductive agent, the binder, and any other component, are dispersed in a solvent (such as N-methylpyrrolidone) to form a positive electrode slurry; and the positive electrode slurry is coated onto the positive electrode current collector, and processes, such as drying and cold pressing, are performed to obtain the positive electrode plate.

### [Electrolyte]

An electrolyte is provided between a positive electrode plate and a negative electrode plate for ion conduction. The type of the electrolyte is not particularly limited in the present application, and may be selected according to requirements. For example, the electrolyte may be liquid, gelled, or all solid.

In some embodiments, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive and a positive electrode film-forming additive, and may further include an additive that can enhance particular performance of a battery, such as an additive that enhances the overcharging performance of the battery or an additive that enhances the high or low temperature performance of the battery.

### [Separator]

In some embodiments, a secondary battery further includes a separator. The type of the separator is not particularly limited in the present application, and any well-known separator of a porous structure having good chemical stability and mechanical stability may be used.

In some embodiments, the material of the separator may be selected from at least one of glass fibers, non-woven cloth, polyethylene, polypropylene, and polyvinylidene fluoride. The separator may be a single-layer film or a multi-layer composite film. This is not particularly limited. When the separator is a multi-layer composite film, materials of respective layers may be identical or different. This is not particularly limited.

In some embodiments, a positive electrode plate, a negative electrode plate, and the separator can be made into an electrode assembly through winding or lamination.

In some embodiments, the secondary battery may include an outer package. The outer package can be used for encapsulating the foregoing electrode assembly and the electrolyte.

In some embodiments, the outer package of the secondary battery may be a hard case such as a hard plastic case, an aluminum case, or a steel case. The outer package of the secondary battery may alternatively be a soft pack such as a pouch-type soft pack. The material of the soft pack may be plastic, and examples of the plastic may include polypropylene, polybutylene terephthalate, polybutylene succinate, and the like.

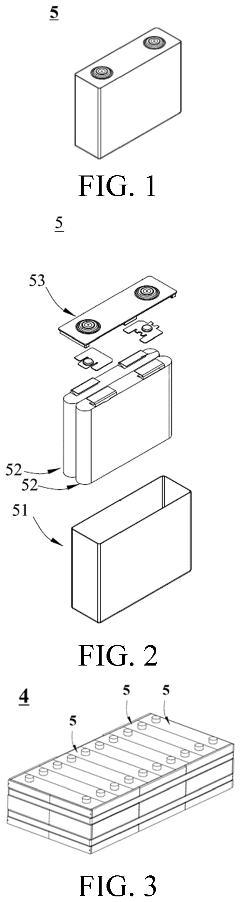

In the present application, the shape of the secondary battery includes, but is not limited to, a cylindrical shape, a prismatic shape, or any other shape. For example, FIG. 1 shows an exemplary secondary battery 5 having a square structure.

In some embodiments, referring to FIG. 2, an outer package may include a case 51 and a cover plate 53. The case 51 may include a bottom plate and side plates connected to the bottom plate, and the bottom plate and the side plates enclose an accommodating cavity. The case 51 has an opening in communication with the accommodating cavity, and the cover plate 53 can cover the opening to seal the accommodating cavity. A positive electrode plate, a negative electrode plate, and a separator can form an electrode assembly 52 through winding or lamination. The electrode assembly 52 is encapsulated in the accommodating cavity. An electrolyte solution infiltrates into the electrode assembly 52. A number of electrode assemblies 52 included in the secondary battery 5 may be one or more, which can be selected by those skilled in the art according to specific actual requirements.

In some embodiments, the secondary battery may be assembled into a battery module, and a number of secondary batteries included in the battery module may be one or more, which can be specifically selected by those skilled in the art based on the application and capacity of the battery module.

FIG. 3 shows an exemplary battery module 4. Referring to FIG. 3, in the battery module 4, a plurality of secondary batteries 5 may be sequentially arranged in a length direction of the battery module 4. Certainly, the plurality of secondary batteries may alternatively be arranged in any other manner. Further, the plurality of secondary batteries 5 may be secured by fasteners.

Optionally, the battery module 4 may further include a shell having an accommodating space, and the plurality of secondary batteries 5 are accommodated in the accommodating space.

In some embodiments, the foregoing battery module may further be assembled into a battery pack, a number of battery modules included in the battery pack may be one or more, which can be specifically selected by those skilled in the art according to the application and capacity of the battery pack.

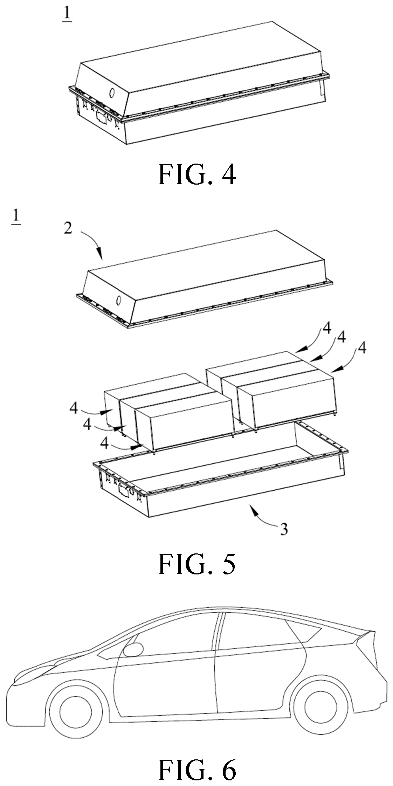

FIG. 4 and FIG. 5 show an exemplary battery pack 1. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3, to form an enclosed space for accommodating the battery modules 4. The plurality of battery modules 4 may be disposed in the battery box in any manner.

In addition, the present application provides a power consuming apparatus. The power consuming apparatus includes at least one of the secondary battery, the battery module, and the battery pack provided in the present application. The secondary battery, the battery module, or the battery pack may be used as a power source of the power consuming apparatus, or may be used as an energy storage unit of the power consuming apparatus. The power consuming apparatus may include, but is not limited to, a mobile device (such as a mobile phone or a notebook computer), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

For the power consuming apparatus, the secondary battery, the battery module, or the battery pack can be selected according to the requirements during use.

FIG. 6 shows an exemplary power consuming apparatus. The power consuming apparatus is an all-electric vehicle, a hybrid electric vehicle, a plug-in hybrid electric vehicle, or the like. To meet requirements of the power consuming apparatus for high power and high energy density of the secondary battery, the battery pack or the battery module may be employed.

As another example, the apparatus may be a mobile phone, a tablet computer, a notebook computer, or the like. The apparatus is generally required to be light and thin, and can use a secondary battery as a power source.

### Examples

Examples of the present application will be described below. The examples described below are exemplary, and are only intended to explain the present application rather than being construed as a limitation on the present application. In the examples, unless otherwise specified, techniques or conditions are those described in the literatures of the art or the product specifications. The reagents or instruments for which the manufacturer is not specified are conventional commercially available products.

### I. Preparation method

### Preparation Example 1: silicon-containing material particles 1

A gas including silane SiH₄ is introduced into a hard carbon substrate with a pore structure at 465°C, vapor deposition is performed for 10 h, and a silicon-based material deposited into the pore structure of the hard carbon substrate is generated from silane by chemical vapor deposition. Then, chemical vapor deposition is performed on the hard carbon substrate by using a carbon source gas and a protective gas in a gas flow ratio of 1:2 at 660°C for 0.5 h, and a carbon layer that accounts for 3% of the total mass of the hard carbon substrate and the deposited silicon-based material is coated onto the outer surface of the hard carbon substrate, to obtain silicon-containing material particles 1, where the gaseous carbon source is acetylene gas. A mass ratio of silicon in silane to the hard carbon substrate is 1:1, a pore volume of micropores of the hard carbon substrate is 0.8 cm³/g, an average pore size is 3.2 nm, a specific surface area is 1,612 m²/g, the silicon-based material includes silicon grain, a grain size of the silicon grains is 2.9 nm, the Dv50 of the silicon-containing material particles 1 is 4.2 µm, and the percentage mass content of silicon is 46%.

### Preparation Example 2: silicon-containing material particles 2

A gas including silane SiH₄ is introduced into a hard carbon substrate with a pore structure at 465°C, vapor deposition is performed for 8 h, and a silicon-based material deposited into the pore structure of the hard carbon substrate is generated from silane by chemical vapor deposition. Then, chemical vapor deposition is performed on the hard carbon substrate by using a carbon source gas and a protective gas in a gas flow ratio of 1:2 at 660°C for 0.5 h, and a carbon layer that accounts for 3% of the total mass of the hard carbon substrate and the deposited silicon-based material is coated onto the outer surface of the hard carbon substrate, to obtain silicon-containing material particles 2, where the gaseous carbon source is acetylene gas. A mass ratio of silicon in silane to the hard carbon substrate is 2:3, a pore volume of micropores of the hard carbon substrate is 0.8 cm³/g, an average pore size is 3.2 nm, a specific surface area is 1,612 m²/g, the silicon-based material includes silicon grains, a grain size of the silicon grains is 2.9 nm, and the percentage mass content of silicon in the silicon-containing material particles 2 is 36%.

### Preparation Example 3: silicon-containing material particles 3

A gas including silane SiH₄ is introduced into a hard carbon substrate with a pore structure at 465°C, vapor deposition is performed for 9 h, and a silicon-based material deposited into the pore structure of the hard carbon substrate is generated from silane by chemical vapor deposition. Then, chemical vapor deposition is performed on the hard carbon substrate by using a carbon source gas and a protective gas in a gas flow ratio of 1:2 at 660°C for 0.5 h, and a carbon layer that accounts for 3% of the total mass of the hard carbon substrate and the deposited silicon-based material is coated onto the outer surface of the hard carbon substrate, to obtain silicon-containing material particles 3, where the gaseous carbon source is acetylene gas. A mass ratio of silicon in silane to the hard carbon substrate is 2:3, a pore volume of micropores of the hard carbon substrate is 0.4 cm³/g, an average pore size is 3.5 nm, a specific surface area is 1,408 m²/g, the silicon-based material includes silicon grains, a grain size of the silicon grains is 3.0 nm, and the percentage mass content of silicon in the silicon-containing material particles 3 is 35%.

### Example 1

### 1) Preparation of silicon-carbon composite material

The silicon-containing material particles 1 are mixed with phenolic resin in a mass ratio of 1:1.2, the mixture is placed in a feed bin 1 of a spray device, under the protection of nitrogen, a gas pressure in the feed bin 1 is set to 300 Kpa, an inlet air temperature is set to 130°C, and an outlet air temperature is set to 70°C, to obtain an intermediate product, which is a semi-dried first intermediate product wrapped with the binder.

Graphite having a Dv50 of 3.8 um and the foregoing prepared intermediate product are placed in a feed bin 2, where a mass ratio of graphite to the silicon-containing material particles is 9:1, a gas pressure in the feed bin 2 is set to 200 KPa, an inlet air temperature is set to 210°C, and an outlet air temperature is set to 170°C, to obtain secondary particles in which an inner region mainly includes the silicon-containing material particles while an outer region mainly includes the graphite material particles.

The foregoing secondary particles are placed in a heating chamber, under a nitrogen atmosphere, an internal temperature of the heating chamber is first increased to 660°C, then a mixed gas of nitrogen and acetylene gas in a volume ratio of 1:2 is introduced into the heating chamber, the temperature is maintained for 0.5 h, and carbon coating is performed on the surfaces of the secondary particles, to obtain a silicon-carbon composite material. A mass fraction of silicon in a region located within a distance r/2 from the geometric center of the silicon-carbon composite material is 45%, a mass fraction of carbon in a region extending inward from the outer surface of the silicon-carbon composite material by a distance r/2 is 98%, a porosity is 28%, the Dv50 is 13.1 um, a particle size distribution span is 1.5, a powder compaction density of the silicon-carbon composite at 49,000 N is 1.02 g/cm³, and a specific surface area is 4.3 m²/g.

### 2) Preparation of negative electrode plate

The prepared silicon-carbon composite material, artificial graphite, conductive carbon black, a binder, namely, styrene butadiene rubber (SBR), and a thickener, namely, sodium carboxymethyl cellulose (CMC-Na), are sufficiently stirred and uniformly mixed in a weight ratio of 20:75:2:2:1 in a solvent system, namely, deionized water, to obtain a negative electrode slurry; the negative electrode slurry is uniformly coated onto a negative electrode current collector, namely, a copper foil, with a thickness of 13 µm, where a coating speed is 25 m/min, and an internal temperature of a coating oven is 110°C; and then, cold pressing and slitting are performed to obtain a negative electrode plate.

### 3) Preparation of positive electrode plate

A positive active material Li(Ni_{0.8}Co_{0.1}Mn_{0.1})O₂, conductive carbon black, and a binder, namely, polyvinylidene fluoride (PVDF), are sufficiently stirred and uniformly mixed in a weight ratio of 96:2:2 in a solvent system, namely, N-methylpyrrolidone, to obtain a positive electrode slurry; the foregoing positive electrode slurry is uniformly coated onto a positive electrode current collector, namely, an aluminum foil, with a thickness of 13 µm, where a coating speed is 30 m/min, and an internal temperature of a coating oven is 110°C; and then, cold pressing and slitting are performed to obtain a positive electrode plate.

### 4) Preparation of electrolyte solution

In a glovebox (H₂O content < 0.1 ppm, and O₂ content < 0.1 ppm), lithium hexafluorophosphate LiPF₆ is dissolved in a mixed organic solvent system of ethylene carbonate (EC) and diethyl carbonate (DEC) (in a volume ratio of 3:7) under an argon atmosphere, and the mixture is uniformly stirred, to obtain an electrolyte solution in which the lithium salt concentration is 1 mol/L. Then, fluoroethylene carbonate (FEC) is added, where the content of FEC is 5% of the total mass of the electrolyte solution.

### 5) Separator

A polypropylene (PP) film is taken as a separator.

### 6) Preparation of battery

The positive electrode plate, the separator, and the composite negative electrode plate are sequentially laminated, to allow the separator to be located between the positive electrode plate and the negative electrode plate to separate the positive electrode plate from the negative electrode plate, winding is performed to obtain an electrode assembly, tabs are welded, the electrode assembly is placed in an outer package, then, the electrolyte solution is injected, the outer package is sealed, and processes, such as standing, cold pressing, formation, trimming, and capacity testing, are performed to obtain a lithium-ion secondary battery of Example 1.

### Example 2

A preparation method of a battery of Example 2 is similar to that of the battery of Example 1, except that the silicon-containing material particles 2 are used in this example. For details, refer to Table 1.

### Example 3 to Example 10

A preparation method of batteries of Example 3 to Example 10 is similar to that of the battery of Example 1, except that preparation parameters of a silicon-carbon composite material and/or the Dv50 of graphite particles are adjusted in these examples. For details, refer to Table 1.

### Example 11

A preparation method of a battery of Example 11 is similar to that of the battery of Example 1, except that the Dv50 of graphite particles is adjusted in this example. For details, refer to Table 1.

### Example 12

A preparation method of a battery of Example 12 is similar to that of the battery of Example 1, except that the silicon-containing material particles 3 are used in this example. For details, refer to Table 1.

**Table 1**

| Serial number | Silicon-containing material particles | Particle size/um of Graphite particles | Preparation of silicon-carbon composite material | | | | | | |
|---|---|---|---|---|---|---|---|---|---|
| | | | First spray granulation | | | Second spray granulation | | | |
| | | | Mass ratio of silicon-containing material particles to binder | Inlet air temperature /°C | Outlet air temperature /°C | Mass ratio of silicon-containing material particles to graphite particles | Inlet air temperature /°C | Outlet air temperature /°C | Spray gas pressure/Kpa |
| Example 1 | Particle 1 | 3.8 | 1:1.2 | 130 | 70 | 1:9 | 210 | 170 | 200 |
| Example 2 | Particle 2 | 3.8 | 1:1.2 | 130 | 70 | 1:9 | 210 | 170 | 200 |
| Example 3 | Particle 1 | 3.8 | 1:1.4 | 130 | 70 | 1:10 | 240 | 190 | 190 |
| Example 4 | Particle 1 | 3.8 | 1:2.1 | 130 | 70 | 1:12 | 280 | 240 | 140 |
| Example 5 | Particle 1 | 3.8 | 1:0.4 | 100 | 60 | 1:5 | 210 | 170 | 200 |
| Example 6 | Particle 1 | 3.8 | 1:0.6 | 130 | 70 | 1:7 | 210 | 170 | 200 |
| Example 7 | Particle 1 | 3.8 | 1:0.8 | 140 | 75 | 1:9 | 210 | 170 | 200 |
| Example 8 | Particle 1 | 3 | 1:1.5 | 130 | 70 | 1:9 | 230 | 190 | 200 |
| Example 9 | Particle 1 | 4 | 1:1.1 | 130 | 70 | 1:9 | 210 | 170 | 200 |
| Example 10 | Particle 1 | 4.2 | 1:1.1 | 130 | 70 | 1:9 | 210 | 170 | 200 |
| Example 11 | Particle 1 | 5 | 1:1.2 | 130 | 70 | 1:9 | 210 | 170 | 200 |
| Example 12 | Particle 3 | 3.8 | 1:1.2 | 130 | 70 | 1:9 | 210 | 170 | 200 |

### Comparative Example 1

A preparation method of a battery of Comparative Example 1 is similar to that of the battery of Example 1, except that a silicon-carbon composite material prepared by directly mixing silicon-containing material particles with graphite and granulating is used in this example. The preparation method specifically includes:

Graphite and silicon-containing material particles that are the same as those in Example 1 are mixed, graphite, the silicon-containing material particles, and phenolic resin are mixed in a ratio of 9:1:1.2, the mixture is placed in a feed bin of a spray device, under the protection of nitrogen, a gas pressure in a feed bin 2 is set to 150 KPa, an inlet air temperature is set to 210°C, and an outlet air temperature is set to 170°C, to obtain secondary particles.

The foregoing secondary particles are placed in a heating chamber, under a nitrogen atmosphere, an internal temperature of the heating chamber is first increased to 660°C, then a mixed gas of nitrogen and acetylene gas in a volume ratio of 1:2 is introduced into the heating chamber, the temperature is maintained for 0.5 h, and carbon coating is performed on the surfaces of the secondary particles, to obtain a silicon-carbon composite material.

### Comparative Example 2

A preparation method of a battery of Comparative Example 2 is similar to that of the battery of Example 1, except that a silicon-carbon composite material prepared by directly mixing silicon-containing material particles with graphite is used in this example. The preparation method specifically includes:

Graphite and silicon-containing material particles that are the same as those in Example 1 are selected, and graphite are uniformly dry-mixed with the silicon-containing material particles in a ratio of 9:1, to obtain a mixed powder material.

### II. Test methods

### 1. Test of gram capacity of silicon-carbon composite material

Preparation of battery cell: a button-type battery is prepared. A lithium foil is taken as a positive electrode. The prepared silicon-carbon composite material, conductive carbon black, a binder, namely, styrene butadiene rubber (SBR), and a thickener, namely, sodium carboxymethyl cellulose (CMC-Na), are sufficiently stirred and uniformly mixed in a weight ratio of 95:2:2:1 in a solvent system, namely, deionized water, to obtain a negative electrode slurry, and the negative electrode slurry is uniformly coated onto a negative electrode current collector, namely, a copper foil, with a thickness of 13 µm, where a coating speed is 25 m/min, and an internal temperature of a coating oven is 110°C; and then, cold pressing and slitting are performed to obtain a negative electrode plate. In a glovebox (H₂O content < 0.1 ppm, and O₂ content < 0.1 ppm), lithium hexafluorophosphate LiPF₆ is dissolved in a mixed organic solvent system of ethylene carbonate (EC) and diethyl carbonate (DEC) (in an EC-to-DEC volume ratio of 3:7) under an argon atmosphere, and the mixture is uniformly stirred, to obtain an electrolyte solution in which the lithium salt concentration is 1 mol/L. A 9 µm polyethylene (PE) film is taken as a separator. The foregoing positive electrode, separator, negative electrode, and electrolyte solution are assembled into a battery for testing.

Test procedure: the battery is left to stand at room temperature for 3 h, then discharged at a constant current of 0.05C to a voltage of 0.005 V, and further discharged at a constant current of 50 µA to the voltage of 0.005 V. A capacity at this time is recorded as a lithiation capacity. The battery is left to stand for 5 min, and then charged at a rate of 0.1C to a voltage of 0.8 V. A capacity at this time is recorded as a delithiation capacity, namely, a material capacity. A ratio of the delithiation capacity to the mass of the silicon-carbon composite material is a gram capacity of the silicon-carbon composite material.

### 2. Test of room-temperature cycling performance of battery

Test procedure: the battery is left to stand at 25°C for 30 min, then charged at a rate of 0.5C to a voltage of 4.2 V, further charged at a constant voltage of 4.2 V to a current of 0.05C, left to stand for 5 min, and then discharged at a rate of 0.5C to a voltage of 2.8 V. An obtained capacity is recorded as an initial capacity C0. The foregoing process is one charging-discharging cycle. The foregoing steps are repeated for the same battery, and a discharge capacity (Cn) of the battery in each cycle is recorded. A capacity retention rate of the battery after each cycle is expressed as Pn=Cn/C0*100%. The test is stopped until Pn≤80%. A number of cycles at this time is recorded.

### 3. Test of high-temperature storage performance of battery

Test conditions: a fully charged battery cell is stored at 60°C, the capacity of the battery cell is tested every 30 days until the capacity decays to 80% of the initial capacity. A number of storage days at this time is recorded.

Test procedure: the battery is left to stand for 30 min, discharged at a rate of 0.5C to a voltage of 2.8 V, left to stand for 5 min, charged at a rate of 0.5C to a voltage of 4.2 V, further charged at a constant pressure of 4.2 V to a current of 0.05C, left to stand for 5 min, and then discharged at a rate of 0.5C to a voltage of 2.8 V. This is a capacity testing process, and each discharge capacity is recorded. The battery is left to stand for 5 min, charged at a rate of 0.5C to a voltage of 4.2 V, and further charged at a constant voltage of 4.2 V to a current of 0.05C. The battery cells are fully charged at this time. Then, the battery cells are placed in a constant temperature box at 60°C, and the capacity is tested according to the foregoing process after 30 days.

Capacity retention rate (%) after n days of storage = (discharge capacity on day n/initial discharge capacity on day 0) × 100%. The test is stopped until the capacity retention rate ≤80%. A number of storage days at this time is recorded. A curve is fitted by using the number of days as the x-axis and the capacity retention rate as the y-axis, to obtain the number of storage days when the capacity retention is 80%.

### III. Analysis of test results of examples and comparative examples

Batteries of the examples and the comparative examples are prepared by the foregoing method, and all performance parameters are measured. Results are shown in the following tables.

It can be seen from Table 2 that an inner region of the silicon-carbon composite material mainly includes the silicon-containing material particles, and an outer region of the silicon-carbon composite material mainly includes the graphite particles. Such a structure can enhance the high-temperature storage performance and cycling stability of the battery. Meanwhile, the silicon-carbon composite material has an excellent capacity.

**Table 2**

| Serial number | Structure of silicon-carbon composite material | Silicon-carbon composite material | | | | Battery | |
|---|---|---|---|---|---|---|---|
| | | Porosity | Mass fraction of silicon in region located within distance r/2 from geometric center | Mass fraction of carbon in region extending inward from surface by distance r/2 | Gram capacity (mAh/g) | Storage performance (day) at 60°C | Number of cycles |
| Example 1 | The inner region mainly includes silicon-containing material particles, and the outer region mainly includes graphite particles | 28% | 45% | 98% | 473 | 298 | 1289 |
| Comparative Example 1 | Secondary particles in which silicon-containing material particles and graphite particles are uniformly distributed | 10% | 48% | 55% | 477 | 210 | 935 |
| Comparative Example 2 | Silicon-containing material particles are directly mixed with graphite particles | / | / | / | 482 | 253 | 1122 |

It can be seen from Table 3 and Table 4 that when the mass fraction of silicon in the region located within the distance r/2 from the geometric center of the silicon-carbon composite material is greater than or equal to 30%, the silicon-carbon composite material has an excellent gram capacity, and the battery has excellent high-temperature storage performance and cycling stability. When the Dv50 of the silicon-carbon composite material is less than or equal to 16 µm, the battery has good high-temperature storage performance and cycling stability.

**Table 3**

| Serial number | Silicon-carbon composite material | | Battery | |
|---|---|---|---|---|
| | Mass fraction of silicon in region located within distance r/2 from geometric center | Gram capacity (mAh/g) | Storage performance (day) at 60°C | Number of cycles |
| Example 1 | 45% | 473 | 298 | 1289 |
| Example 2 | 35% | 455 | 301 | 1231 |

**Table 4**

| Serial number | Silicon-carbon composite material | | | Battery | |
|---|---|---|---|---|---|
| | Dv50/µm | Mass fraction of silicon in region located within distance r/2 from geometric center | Gram capacity (mAh/g) | Storage performance (day) at 60°C | Number of cycles |
| Example 1 | 13.1 | 45% | 473 | 298 | 1289 |
| Example 3 | 14.5 | 30% | 452 | 286 | 1153 |
| Example 4 | 17.5 | 20% | 418 | 270 | 1002 |

It can be seen from Table 5 that when the mass fraction of carbon in the region extending inward from the surface of the silicon-carbon composite material by the distance r/2 is greater than or equal to 80%, the battery has excellent high-temperature storage performance and cycling stability. Meanwhile, the silicon-carbon composite material has an excellent gram capacity.

**Table 5**

| Serial number | Silicon-carbon composite material | | Battery | |
|---|---|---|---|---|
| | Mass fraction of carbon in region extending inward from surface by distance r/2 | Gram capacity (mAh/g) | Storage performance (day) at 60°C | Number of cycles |
| Example 1 | 98% | 473 | 298 | 1289 |
| Example 5 | 70% | 504 | 256 | 998 |
| Example 6 | 80% | 495 | 285 | 1078 |
| Example 7 | 90% | 478 | 291 | 1201 |

It can be seen from Table 6 that when the porosity of the silicon-carbon composite material is 20% to 45%, the silicon-carbon composite material has an excellent gram capacity, and the battery has excellent high-temperature storage performance and cycling stability.

**Table 6**

| Serial number | Silicon-carbon composite material | | Battery | |
|---|---|---|---|---|
| | Porosity | Gram capacity (mAh/g) | Storage performance (day) at 60°C | Number of cycles |
| Example 1 | 28% | 473 | 298 | 1289 |
| Example 8 | 20% | 471 | 305 | 1142 |
| Example 9 | 35% | 465 | 285 | 1299 |
| Example 10 | 45% | 469 | 278 | 1309 |

It can be learned from a comparison between Example 1 and Example 11 in Table 7 that when the Dv50 of the silicon-containing material particles is greater than the Dv50 of the graphite particles, the high-temperature storage performance of the battery can be enhanced. It can be learned from a comparison between Example 1 and Example 12 in Table 7 that when the pore volume of micropores of the carbon substrate in the silicon-containing material particles is greater than or equal to 0.5 cm³/g, the silicon-carbon composite material has an excellent gram capacity, and the battery has excellent high-temperature storage performance and cycling performance.

**Table 7**

| Serial number | Silicon-carbon composite material | Battery | |
|---|---|---|---|
| | Gram capacity (mAh/g) | Storage performance (day) at 60°C | Number of cycles |
| Example 1 | 473 | 298 | 1289 |
| Example 11 | 475 | 271 | 1337 |
| Example 12 | 458 | 291 | 1331 |

It should be noted that the present application is not limited to the foregoing embodiments. The above embodiments are merely exemplary, and embodiments having substantially the same technical idea and the same effects within the scope of the technical solutions of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A silicon-carbon composite material, wherein the silicon-carbon composite material comprises an inner region and an outer region, the inner region mainly comprises silicon-containing material particles, and the outer region mainly comprises carbon-based material particles.

2. The silicon-carbon composite material according to claim 1, wherein a number of silicon-containing material particles in the inner region is less than or equal to 3, and optionally, 1 or 2.

3. The silicon-carbon composite material according to claim 1 or 2, wherein a mass fraction of silicon elements in a region located within a distance r/2 from the geometric center of the silicon-carbon composite material is greater than or equal to 30%, and optionally, 35% to 45%, wherein r denotes a minor axis of the silicon-carbon composite material.

4. The silicon-carbon composite material according to any one of claims 1 to 3, wherein a mass fraction of carbon elements in a region extending inward from the outer surface of the silicon-carbon composite material by a distance r/2 is greater than or equal to 80%, and optionally, 90% to 100%, wherein r denotes the minor axis of the silicon-carbon composite material.

5. The silicon-carbon composite material according to any one of claims 1 to 4, wherein the outer region of the silicon-carbon composite material further comprises an amorphous carbon coating layer.

6. The silicon-carbon composite material according to any one of claims 1 to 5, wherein the Dv50 of the silicon-containing material particles is greater than or equal to the Dv50 of the carbon-based material particles.

7. The silicon-carbon composite material according to any one of claims 1 to 6, wherein the Dv50 of the silicon-containing material particles is less than or equal to 5 µm; and/or
the Dv50 of the carbon-based material particles is less than or equal to 5 µm.

8. The silicon-carbon composite material according to any one of claims 1 to 7, wherein
the silicon-containing material particles comprise at least one of elemental silicon, a silicon-oxygen material, a silicon-carbon material, and a silicon-metal alloy, and optionally, the silicon-containing material particles comprise a silicon-carbon material; and/or
the carbon-based material particles comprise at least one of artificial graphite and natural graphite, and optionally, the carbon-based material particles comprise artificial graphite.

9. The silicon-carbon composite material according to any one of claims 1 to 8, wherein
the silicon-containing material particles comprise a carbon substrate having a pore structure and a silicon-based material disposed in the pore structure of the carbon substrate.

10. The silicon-carbon composite material according to claim 9, wherein the carbon substrate comprises micropores with a pore size less than 2 nm, mesopores with a pore size ranging from 2 nm to 50 nm, and macropores with a pore size greater than 50 nm.

11. The silicon-carbon composite material according to claim 10, wherein a pore volume of the micropores is greater than or equal to 0.5 cm³/g, and optionally, 0.6 cm³/g to 0.9 cm³/g.

12. The silicon-carbon composite material according to any one of claims 9 to 11, wherein an average pore size of the carbon substrate is less than or equal to 5 nm, and optionally, 1 nm to 3.5 nm.

13. The silicon-carbon composite material according to any one of claims 9 to 12, wherein a specific surface area of the carbon substrate is greater than or equal to 1,200 m²/g, and optionally, 1,500 m²/g to 1,800 m²/g.

14. The silicon-carbon composite material according to any one of claims 9 to 13, wherein the silicon-based material comprises at least one of elemental silicon, a silicon-oxygen material, a silicon-carbon material, and a silicon-metal alloy; and the carbon substrate comprises at least one of graphite, soft carbon, and hard carbon.

15. The silicon-carbon composite material according to any one of claims 9 to 14, wherein the silicon-based material comprises silicon grains, optionally, a size of the silicon grains is less than or equal to 10 nm, and optionally, the size of the silicon grains is less than or equal to 3 nm.

16. The silicon-carbon composite material according to any one of claims 1 to 15, wherein a porosity of the silicon-carbon composite material is 20% to 45%, and optionally, 20% to 35%.

17. The silicon-carbon composite material according to any one of claims 1 to 16, wherein the silicon-carbon composite material further satisfies at least one of the following conditions:
(1) a volume-based median particle size Dv50 of the silicon-carbon composite material is less than 16 µm, and optionally, 8 µm to 16 µm;
(2) a particle size distribution span (Dv90-Dv10)/Dv50 of the silicon-carbon composite material is 0.5 to 1.8, and optionally, 0.8 to 1.5;
(3) a powder compaction density of the silicon-carbon composite material under 49,000 N is 0.7 g/cm³ to 1.3 g/cm³, and optionally, 0.95 g/cm³ to 1.1 g/cm³; and
(4) a specific surface area of the silicon-carbon composite material is less than or equal to 6 m²/g, and optionally, less than or equal to 4.5 m²/g.

18. A preparation method of a silicon-carbon composite material, comprising the following step:
providing silicon-containing material particles and carbon-based material particles;
performing first spray granulation on the silicon-containing material particles and a binder to obtain a first intermediate product;
spraying the carbon-based material particles onto the surface of the first intermediate product for second spray granulation to prepare a silicon-carbon composite material, wherein
the silicon-carbon composite material comprises an inner region and an outer region, the inner region mainly comprises the silicon-containing material particles, and the outer region mainly comprises the carbon-based material particles.

19. The preparation method according to claim 18, wherein the silicon-containing material particles are prepared by the following steps:
introducing a gas comprising a silicon precursor into a carbon substrate having a pore structure; and
generating a silicon-based material attached within the pore structure from the silicon precursor by chemical vapor deposition, to obtain the silicon-containing material particles.

20. The preparation method according to claim 18 or 19, wherein
a mass ratio of the silicon-containing material particles to the binder is 1:2 to 2:1; and and/or
a mass ratio of the silicon-containing material particles to the carbon-based material particles is 1:12 to 1:6.

21. The preparation method according to any one of claims 18 to 20, wherein the first spray granulation satisfies at least one of the following conditions:
(1) a temperature difference between an inlet air temperature and an outlet air temperature is not greater than 60°C;
(2) the inlet air temperature ranges from 110°C to 150°C;
(3) the outlet air temperature ranges from 50°C to 90°C; and
(4) a feed gas pressure ranges from 250 KPa to 350 KPa, and optionally, from 280 KPa to 320 KPa.

22. The preparation method according to any one of claims 18 to 21, wherein the second spray granulation satisfies at least one of the following conditions:
(1) a temperature difference between an inlet air temperature and an outlet air temperature ranges from 20°C to 40°C;
(2) the inlet air temperature ranges from 170°C to 280°C;
(3) the outlet air temperature ranges from 130°C to 240°C; and
(4) a feed gas pressure ranges from 150 KPa to 260 KPa, and optionally, from 180 KPa to 210 KPa.

23. The preparation method according to any one of claims 18 to 22, wherein the preparation method of the silicon-carbon composite material further comprises:
after the second spray granulation, introducing a gaseous carbon source, and performing carbonization after vapor-phase coating to obtain the silicon-carbon composite material.

24. The production method according to claim 23, wherein the introducing a gaseous carbon source, and performing carbonization after vapor-phase coating to obtain the silicon-carbon composite material satisfies at least one of the following conditions:
(1) the gaseous carbon source comprises a gaseous hydrocarbon, and optionally, is at least one of methane, ethylene, and acetylene;
(2) a carbonization temperature ranges from 400°C to 800°C;
(3) carbonization time is 0.2 h to 2 h; and
(4) a protective gas during carbonization is nitrogen or argon, and optionally, a gas flow ratio of the gaseous carbon source to the protective gas is 1:5 to 1:1.5.

25. The method according to any one of claims 18 to 24, wherein
the binder comprises at least one of phenolic resin, styrene butadiene rubber, polyacrylic acid, carboxymethyl cellulose, sodium alginate, carboxymethyl chitosan, polyacrylonitrile, and polyvinyl alcohol.

26. A secondary battery, wherein the secondary battery comprises a negative electrode plate, and the negative electrode plate comprises the silicon-carbon composite material according to any one of claims 1 to 17 or a silicon-carbon composite material prepared by the preparation method according to any one of claims 18 to 25.

27. A power consuming apparatus, comprising the secondary battery according to claim 26.
